# EUROPÄISCHE PATENTSCHRIFT

(11) **EP 3 339 052 B1**
(45) Veröffentlichungstag und Bekanntmachung des Hinweises auf die Patenterteilung: **02.11.2022**
(21) Anmeldenummer: 18151556.0
(22) Anmeldetag: 24.06.2011
(51) Int. Cl.: B42D 25/328, B42D 25/405, B42D 25/425, B42D 25/47, B44C 1/17, B44F 1/10, B42D 15/00

(54) **VERFAHREN ZUR DEKORATION VON OBERFLÄCHEN**
METHOD FOR DECORATING SURFACES
PROCÉDÉ DE DÉCORATION DE SURFACES

(30) Priorität: 28.06.2010 DE 102010025278; 20.10.2010 DE 102010048817
(43) Veröffentlichungstag der Anmeldung: 27.06.2018
(62) Teilanmeldung aus: 11727928.1
(73) Patentinhaber: Leonhard Kurz Stiftung & Co. KG, 90763 Fürth (DE)
(72) Erfinder: LUTZ, Norbert, 90607 Rückersdorf (DE); KURZ, Walter, 90768 Fürth (DE); BREHM, Ludwig, 91325 Adelsdorf (DE); BEZOLD, Hans Peter, 92237 Sulzbach-Rosenberg (DE)
(74) Vertreter: Louis Pöhlau Lohrentz

(56) Entgegenhaltungen:
- EP-A1- 1 241 618
- EP-A1- 1 264 704
- WO-A1-2004/041546
- DE-A1- 10 241 803
- DE-C1- 4 433 858
- DE-U1- 29 807 638

## Beschreibung

Die Erfindung betrifft ein Verfahren zur Dekoration von Oberflächen, insbesondere zur Dekoration von Umverpackungen gemäß den Merkmalen des Oberbegriffs des Anspruchs 1.

Es ist bekannt Umverpackungen, beispielsweise Umverpackung von Lebensmitteln, mit einer maschinenlesbaren optischen Markierung, insbesondere einem Barcode zu versehen. Diese maschinenlesbare optische Markierung wird üblicherweise auf die Umverpackung mittels Offset-Druck zusammen mit einem umgebenden Dekor aufgedruckt, welches das dekorative Erscheinungsbild der Umverpackung bestimmt. Aufgrund der eingesetzten, auf hohe Stückzahlen optimierten Druckverfahren ist es hierbei nicht möglich, die optische maschinenlesbare Markierung verpackungsindividuell zu wählen. Die optische maschinenlesbare Markierung ist - wie auch das Dekor - bei allen gefertigten Umverpackungen identisch und enthält produktspezifische Informationen, nicht jedoch packungsspezifische Informationen.

Das Dokument DE 298 07 638 U1 beschreibt die Kennzeichnung von Sicherheitsmerkmalen auf Prägefolien. Hierbei weist die Prägefolie ein Sicherheitselement auf, das mit einer individualisierenden Kennzeichnung versehen ist.

Der Erfindung liegt nunmehr die Aufgabe zugrunde, eine verbesserte Dekoration von Oberflächen zu ermöglichen, welche weiter auch ermöglicht, eine individualisierte maschinenlesbare optische Markierung auf die zu dekorierende Oberfläche aufzubringen.

Diese Aufgabe wird von einem Verfahren zur Dekoration von Oberflächen, insbesondere zur Dekoration von Umverpackungen, nach Anspruch 1 gelöst. Diese Aufgabe wird weiter von einem Verfahren zur Dekoration von Oberflächen, insbesondere zur Dekoration von Umverpackungen, nach Anspruch 4 gelöst.
Vorteilhafte Ausgestaltungen der Erfindung sind in den Unteransprüchen bezeichnet.

Durch die Erfindung wird es ermöglicht, eine zu dekorierende Oberfläche, beispielsweise eine Umverpackung oder ein Substratblatt, in nur einem einzigen Arbeitsschritt sowohl mit einem sehr hochwertigen und optisch ansprechenden Dekor und einer individualisierten maschinenlesbaren optischen Markierung zu versehen. Dies hat gegenüber dem Ansatz, komplex und damit kostengünstig bisher nur mittels großindustrieller Prozesse herstellbare Dekore einerseits und individualisierende Kennzeichnungen andererseits in zwei getrennten Bearbeitungsschritten und in getrennten Bearbeitungsstationen auf eine Verpackung oder ein Substratblatt aufzubringen, nun den Vorteil, dass der Produktionsprozess vereinfacht und die Ausschussrate verringert wird, sodass die Produktion verbilligt wird. Dadurch dass ein und dasselbe Transferband sowohl für die Aufbringung einer individualisierten Markierung als auch des optisch variablen Dekorelements eingesetzt wird, ergeben sich weitere Kostenvorteile im Produktionsprozess. Weiter wird es so ermöglicht, die individualisierte maschinenlesbare optische Markierung stets registergenau relativ zu einem optisch variablen Dekor zu positionieren und damit zu vermeiden, dass das auf die Oberfläche aufgebrachte optisch variable Dekorelement die Auslesung der maschinenlesbaren optischen Markierung auf unvorhersehbarer Art und Weise stört.

Die zu dekorierende Oberfläche, beispielsweise ein Trägermaterial einer Verpackung oder eines Substratblattes, kann zusätzlich weitere Dekorbestandteile aufweisen, die vor und/oder nach der Applikation des optisch variablen Dekorelements und der maschinenlesbaren optischen Markierung aufgebracht, insbesondere aufgedruckt werden. Die zu dekorierende Oberfläche kann opake und/oder transluzente und/oder transparente Flächenbereiche oder auch Durchbrüche aufweisen, wobei das optisch variable Dekorelement und/oder die maschinenlesbare optische Markierung auf der Vorderseite und/oder auf der Rückseite der zu dekorierenden Oberfläche vorgesehen sein kann. Beispielsweise kann die zu dekorierende Oberfläche eine opake Schicht aus Papier oder Pappe aufweisen, in welche ein oder mehrere Fenster oder Durchbrüche ausgespart, insbesondere ausgestanzt sind und wobei die ein oder mehreren Fenster oder Durchbrüche mit einer transparenten oder transluzenten Folie zumindest auf einer Seite der zu dekorierenden Oberfläche verschlossen sind. Die Fenster oder Durchbrüche in der zu dekorierenden Oberfläche können so ausgestaltet sein, dass die zu dekorierende Oberfläche aus einem mehrschichtigen Schichtengebilde besteht, bei dem eine oder mehrere, insbesondere opake, Schichten zur Bildung eines Fensters nicht vorhanden, insbesondere ausgespart, vorzugsweise ausgestanzt sind und eine oder mehrere weitere, insbesondere transparente Schichten nicht ausgespart sind und dadurch das in den anderen Schicht vorgesehene Fenster verschließen. Alternativ dazu können die die zu dekorierende Oberfläche bildenden Schichten alle vollständig durchtrennt sein, wodurch ein offenes Fenster gebildet wird. Das optisch variable Dekorelement und/oder die maschinenlesbare optische Markierung kann dabei den opaken und/oder transluzenten und/oder transparenten Flächenbereichen jeweils lagegenau zugeordnet sein oder aber mit diesen Flächenbereichen jeweils nur teilweise überlappen. Das optisch variable Dekorelement kann entweder auf einer zusätzlichen, das Fenster verschließenden, insbesondere transparenten Schicht angeordnet sein oder als selbsttragendes, insbesondere in Flächenanteilen partiell transparentes, Dekorelement selbst das Fenster verschließen. Beispielsweise kann das Aufbringen auf der Rückseite der zu dekorierenden Oberfläche in den transluzenten und/oder transparenten Flächenbereichen im Konterdruck, d.h. spiegelverkehrt erfolgen, damit das optisch variable Dekorelement und die maschinenlesbare optische Markierung von der Vorderseite seitenrichtig erkennbar sind. Die zu dekorierende Oberfläche kann dabei als Schutzschicht für die auf der Rückseite angeordneten Dekorelemente, Markierungen oder Dekorbestandteile dienen.

Es wird hierdurch die vorteilhafte Möglichkeit eröffnet, das Transferband mit dem optisch variablen Dekorelement insbesondere großtechnisch an einem Produktionsstandort herzustellen und anschließend an einem anderen Produktionsstandort in das Transferband nachträglich die individualisierte maschinenlesbare optische Markierung einzubringen. An diesem anderen Produktionsstandort kann anschließend das optisch variable Dekorelement und das individualisierte maschinenlesbare optische Markierung auf das Trägermaterial aufgebracht werden. Alternativ besteht natürlich auch die Möglichkeit, beide Komponenten, also das optisch variable Dekorelement und das individualisierte maschinenlesbare optische Markierung an ein und demselben Produktionsstandort auf das Transferband aufzubringen.

Nach einem ersten Aspekt der Erfindung wird zur Individualisierung die der Ablöseschicht entgegengesetzte Oberfläche der Dekorlage im zweiten Flächenbereich oder in dem den zweiten Flächenbereich entsprechenden Oberflächenbereich der zur dekorierenden Oberfläche mit einer musterförmigen Kleberschicht versehen. Die Formgebung der musterförmigen Kleberschicht entspricht hierbei der Formgebung der individualisierten maschinenlesbaren optischen Codierung. Beim Transferieren wird das Transferband im zweiten Flächenbereich mittels eines Prägewerkzeugs gegen die zu dekorierende Oberfläche, vorzugsweise unter Einwirken von Wärme zur Aktivierung der Kleberschicht und/oder unter Einwirken von energiereicher Strahlung zur Aushärtung der Kleberschicht gepresst. In den Teilbereichen, in denen die musterförmige Kleberschicht zwischen der Dekorlage und der zu dekorierenden Oberfläche angeordnet ist, verbleiben die individualisierbaren Schichten beim Abziehen auf der zu dekorierenden Oberfläche. In den übrigen Teilbereichen des zweiten Flächenbereichs verbleiben die individualisierbaren Schichten auf dem Transferband und werden beim Abziehen von den auf der zu dekorierenden Oberfläche verbleibenden Teilbereichen getrennt. Diese Vorgehensweise bringt den Vorteil mit sich, das als individualisierbare Schicht unterschiedlichste Schichten einsetzbar sind und die individualisierte optische Markierung so auch Schichten umfassen kann, welche mittels eines Druckverfahren nicht auf eine zu dekorierende Oberfläche applizierbar sind.

Vorzugsweise weist das bereitgestellte Transferband hierbei bereits eine partielle Kleberschicht auf, welche auf der der Ablöseschicht entgegengesetzte Oberfläche der Dekorlage aufgebracht ist und die in den ersten Flächenbereichen, nicht jedoch in den zweiten Flächenbereichen vorgesehen ist. So kann mittels Tiefdruck oder Siebdruck, also einem großindustriellen Verfahren, eine solche partielle Kleberschicht auf die der Ablöseschicht entgegengesetzte Oberfläche der Dekorlage in den ersten Flächenbereichen und gegebenenfalls auch weiteren Flächenbereichen des Transferbandes aufgedruckt werden, wobei jedoch jedenfalls die zweiten Flächenbereiche nicht mit dieser partiellen Kleberschicht bedruckt werden.

Die musterförmige Kleberschicht wird vorzugsweise mittels Tintenstrahldruck oder Laserdruck aufgebracht. Hierzu wird ein vorzugsweise thermisch aktivierbarer Kleber in Lösung gebracht und mittels eines Tintenstrahldruckers auf das Transferband in den zweiten Flächenbereich aufgedruckt und sodann getrocknet. Weiter ist es möglich, dass mittels eines Laserdruckers ein thermisch aktivierbarer Kleber auf das Transferband aufgedruckt und durch entsprechende thermische Behandlung aufgeschmolzen wird und damit an dem Transferband in musterförmiger Form haftet. Eine weitere bevorzugte Möglichkeit besteht darin, dass die musterförmige Kleberschicht von einer Transferfolie mittels eines Thermotransferdruckkopfes musterförmig auf die der Ablöseschicht entgegengesetzte Oberfläche der Dekorlage im zweiten Flächenbereich oder dem dem zweiten Flächenbereich entsprechenden Oberflächenbereich der zu dekorierenden Oberfläche übertragen wird. Hierzu wird auf der Transferfolie eine Schicht aus einem thermisch aktivierbaren Kleber aufgebracht, welcher durch den Thermotransferdruckkopf entsprechend dem vorgegebenen Muster aufgeschmolzen und sodann auf die Oberfläche des Transferbandes oder der zu dekorierenden Oberfläche übertragen wird.

Gemäß einem nicht erfindungsgemäßen Ausführungsbeispiel wird die der Ablöseschicht entgegengesetzte Oberfläche der Dekorlage im zweiten Flächenbereich vollflächig mit einer Kleberschicht versehen. Dies erfolgt vorzugsweise mittels Siebdruck oder Tiefdruck. Hierbei ist es auch möglich, dass die Kleberschicht nicht nur in den zweiten Flächenbereich auf das Transferband aufgedruckt wird, sondern dass das Transferband sowohl in den ersten als auch in den zweiten Flächenbereichen oder auch in weiteren Flächenbereichen mit der Kleberschicht bedruckt wird, auch vollflächig mit der Kleberschicht bedruckt wird. Zur Individualisierung wird auf die Kleberschicht im zweiten Flächenbereich eine musterförmige Deaktivierungsschicht aufgebracht. Die Formgebung der Deaktivierungsschicht entspricht hierbei der Formgebung der individualisierten maschinenlesbaren optischen Markierung in Negativform. Beim Transferieren des Transferbandes wird das Transferband im zweiten Flächenbereich mittels eines Prägewerkzeugs gegen die zu dekorierende Oberfläche gepresst. In den Teilbereichen, in denen die musterförmige Deaktivierungsschicht nicht zwischen der Kleberschicht und der zu dekorierenden Oberfläche angeordnet ist, verbleiben die individualisierbaren Schichten beim Abziehen auf der zu dekorierenden Oberfläche. In den übrigen Teilbereichen des zweiten Flächenbereichs, in denen die Deaktivierungsschicht vorgesehen ist, verbleiben die individualisierbaren Schichten auf dem Transferband, sodass beim Abziehen des Transferbands von der zu dekorierenden Oberfläche diese Teilbereich von den auf der zu dekorierenden Oberfläche verbleibenden Teilbereiche getrennt werden.

In dem nicht erfindungsgemäßen Ausführungsbeispiel wird als Deaktivierungsschicht eine Schicht aus einem Material verwendet, welches ein Anhaften des gegen die zu dekorierende Oberfläche gepressten Transferbands auf der zu dekorierenden Oberfläche verhindert oder nach dem Anpressen zumindest eine Haftkraft aufweist, die geringer ist als die Bruchkraft der Dekorlage zwischen den Flächenbereichen mit aufgebrachter Deaktivierungsschicht und den Flächenbereichen ohne Deaktivierungsschicht.

In dem nicht erfindungsgemäßen Ausführungsbeispiel hat es sich bewährt, als Deaktivierungsschicht eine Schicht zu verwenden, welche insbesondere strahlungshärtbare Silikonacrylate enthält.

Die Schichtdicke der nicht erfindungsgemäßen Deaktivierungsschicht beträgt in diesem Fall vorzugsweise zwischen 0,1 µm und 2 µm, weiter bevorzugt zwischen 0,2 µm und 0,5 µm.

Alternativ oder zusätzlich zu Silikonacrylaten können in dem nicht erfindungsgemäßen Ausführungsbeispiel andere strahlungshärtbare oder strahlungsvernetzbare Lackbestandteile mit niedriger Oberflächenspannung im ausgehärteten Zustand vorgesehen sein. Diese Lackbestandteile sollen im ausgehärteten oder weitgehend vollständig vernetzten Zustand keine thermoplastischen Eigenschaften mehr aufweisen, um beim Anpressen des Transferbandes mittels Prägewerkzeug unter Einwirkung von Wärme keine klebenden oder haftenden Eigenschaften mehr aufweisen zu können und dadurch die klebenden oder haftenden Eigenschaften der Kleberschicht wirksam deaktivieren zu können.

Weiter hat es sich in dem nicht erfindungsgemäßen Ausführungsbeispiel auch bewährt, als Deaktivierungsschicht eine stark pigmentierte Lackschicht zu verwenden. Diese Lackschicht weist im getrockneten Zustand vorzugsweise einen Pigmentanteil von mehr als 30 Gewichtsprozent, weiter bevorzugt von 50 Gewichtsprozent auf.

Die Deaktivierungsschicht wird in dem nicht erfindungsgemäßen Ausführungsbeispiel vorzugsweise mittels eines Tintenstrahldruckers oder eines Laserdruckers, wie oben bereits in Bezug auf die musterförmige Kleberschicht beschrieben, auf das Transferband aufgedruckt. Weiter ist es auch möglich, das die Deaktivierungsschicht mittels eines Thermotransferdruckkopfes musterförmig von einer Transferfolie auf das Transferband aufgebracht wird, wie dies auch oben in Bezug auf die musterförmige Kleberschicht beschrieben worden ist.

Gemäß eines weiteren nicht erfindungsgemäßen Ausführungsbeispiels wird auf die der Ablöseschicht entgegengesetzte Oberfläche der Dekorlage im zweiten Flächenbereich vollflächig ein strahlenaktivierbarer oder strahlendeaktivierbarer Kleber aufgebracht und so diese Oberfläche mit einer entsprechenden strahlenaktivierbaren oder strahlendeaktivierbaren Kleberschicht versehen.

Unter strahlenaktivierbarer Kleberschicht wird hierbei eine Kleberschicht verstanden, welche erst nach entsprechender Bestrahlung mit energiereicher Strahlung, vorzugsweise UV-Strahlung und gegebenenfalls nach weiteren Kriterien (Temperatur, Druck) eine Klebkraft zwischen den angrenzenden Oberflächen entwickelt. Es kann sich bei einem strahlenaktivierbaren Kleber beispielsweise um einen UV-aktivierbaren Kleber handeln, der bei Bestrahlung mittels UV-Licht vernetzt und so die angrenzenden Oberflächen miteinander verklebt. Es kann sich bei dem strahlenaktivierbaren Kleber jedoch auch um ein durch Hitze oder Druck aktivierbaren Kleber handeln, bei dem die Aktivierbarkeit durch Hitze oder Druck eine vorausgehende Bestrahlung, beispielsweise mittels UV-Licht voraussetzt. Es kann sich bei dem Kleber jedoch auch um einen sogenannten Dualcure-Kleber handeln, der mittels Hitze, Druck und gleichzeitiger und/oder zeitlich vor- und/oder nachgeordneter Einwirkung von energiereicher Strahlung aktiviert werden kann.

Unter strahlendeaktivierbaren Kleber handelt es sich um einen Kleber, der nach entsprechender Bestrahlung seine Klebekraft verliert.

Zur Individualisierung wird die Kleberschicht im zweiten Flächenbereich musterförmig mit einer zur Aktivierung beziehungsweise Deaktivierung der Kleberschicht geeigneten Strahlenquelle musterförmig bestrahlt. Die Formgebung der bestrahlten Bereiche entspricht der Formgebung der individualisierbaren maschinenlesbaren optischen Markierung in Negativform. Beim Transferieren wird das Transferband im zweiten Flächenbereich mittels eines Prägewerkzeugs gegen die zu dekorierende Oberfläche gepresst. In den Teilbereichen, in denen die Kleberschicht aktiviert beziehungsweise nicht deaktiviert ist, verbleiben die individualisierbaren Schichten beim Abziehen auf der zu dekorierenden Oberfläche. In den übrigen Teilbereichen des zweiten Flächenbereichs verbleiben die individualisierbaren Schichten auf dem Transferband und werden beim Abziehen von den auf der zu dekorierenden Oberfläche verbleibenden Teilbereichen getrennt.

So ist es in einem nicht erfindungsgemäßen Beispiel möglich, dass als Kleberschicht ein strahlenvernetzbarer Kleber eingesetzt wird und die Kleberschicht musterförmig in Positivform bestrahlt wird, während das Transferband im zweiten Flächenbereich mittels des Prägewerkzeugs gegen die zu dekorierende Oberfläche gepresst wird. In den bestrahlten Bereichen vernetzt die Kleberschicht und die darüberliegenden Teilbereiche der Dekorlage haften damit an der zu dekorierenden Oberfläche an. Weiter ist es auch möglich, dass eine strahlenhärtbare Kleberschicht auf die zweiten Flächenbereiche aufgebracht wird und vor dem Aufpressen des Transferbandes mittels des Prägewerkzeugs in Negativform bestrahlt wird. In den bestrahlten Bereichen härtet die Kleberschicht aus und kann damit im Weiteren nicht mehr zur Vermittlung einer Klebkraft zwischen zwei Oberflächen aktiviert werden. Anschließend wird das Transferband in den zweiten Flächenbereichen mit dem Prägewerkzeug gegen die zu dekorierende Oberfläche gepresst und hierbei die Kleberschicht noch mal zur Entwicklung einer Klebkraft auch vollflächig belichtet, wobei dann die Dekorlage in den Bereichen an der zu dekorierenden Oberfläche anhaftet, in denen die Kleberschicht noch aktivierbar ist und nicht bereits durch die Vorbelichtung ausgehärtet ist.

Gemäß eines weiteren nicht erfindungsgemäßen Ausführungsbeispiels wird die der Ablöseschicht entgegengesetzte Oberfläche der Dekorlage im zweiten Flächenbereich vollflächig mit einer Kleberschicht versehen, wie dies bereits oben ausgeführt ist. Im zweiten Flächenbereich wird als Ablöseschicht eine strahlenvernetzbare Ablöseschicht vorgesehen. Es ist hierbei auch möglich, dass die Ablöseschicht nicht nur im zweiten Flächenbereich strahlenvernetzbar ist, sondern dass es sich bei der Ablöseschicht des Transferbandes vollflächig um eine strahlenvernetzbare Ablöseschicht handelt. Zur Individualisierung der Ablöseschicht wird die Ablöseschicht im zweiten Flächenbereich musterförmig mit einer zur Vernetzung der Ablöseschicht geeigneten Strahlenquelle bestrahlt. Die Formgebung der bestrahlten Teilbereiche der Ablöseschicht entspricht der Formgebung der individualisierten maschinenlesbaren optischen Markierung in Negativform. Beim Transferieren wird das Transferband im zweiten Flächenbereich mittels eines Prägewerkzeugs gegen die zu dekorierende Oberfläche gepresst. In den Teilbereichen, in denen die Ablöseschicht nicht bestrahlt ist, verbleiben die individualisierbaren Schichten auf der zu dekorierenden Oberfläche. In diesem Bereich ist die durch die Kleberschicht vermittelte Haftkraft zwischen der Dekorlage und der zu dekorierenden Oberfläche größer als die durch Ablöseschicht vermittelte Haftkraft zwischen der Trägerfolie und der Dekorlage. In den übrigen Teilbereichen des zweiten Flächenbereichs, in denen die Ablöseschicht bestrahlt ist, verbleiben die individualisierbaren Schichten auf dem Transferband und werden so von den auf der zu dekorierenden Oberfläche verbleibenden Teilbereiche der Dekorlage getrennt. In diesem Bereich ist durch die Vernetzung der Ablöseschicht bedingt die durch die Ablöseschicht vermittelte Haftkraft zwischen der Trägerfolie und der Dekorlage höher als die durch die Kleberschicht vermittelte Haftkraft zwischen der Dekorlage und der zu dekorierenden Oberfläche. Die durch die Kleberschicht und die Ablöseschicht vermittelten Haftkräfte werden entsprechend eingestellt um die oben beschriebenen Bedingungen zu erfüllen.

Wie bereits oben ausgeführt, ist es mittels der oben angeführten Verfahren möglich, eine Vielzahl von unterschiedlichen Schichten als individualisierte Schicht einzusetzen.

Es ist besonders vorteilhaft, die Dekorlage in den zweiten Flächenbereichen so auszugestalten, dass sie ein oder mehrere der folgenden Schichten als individualisierbare Schicht umfasst: eine oder mehrere auch unterschiedlich eingefärbte Lackschichten, eine metallische Reflektionsschicht, eine Replizierschicht mit abgeformter Reliefstruktur, eine Volumenhologrammschicht, ein Dünnfilmschichtsystem, eine Schicht umfassend Flüssigkristalle, insbesondere cholesterische Flüssigkristalle, ein oder mehrere Lackschichten enthalten optisch variable Pigmente, beispielsweise Dünnfilmschichtpigmente oder metallische Pigmente, ein oder mehrere Lackschichten umfassende fluoreszierende, lumineszierende oder thermochrome Pigmente oder Kombinationen aus obigen Materialien und/oder Schichten.

Gemäß einem nicht erfindungsgemäßen Ausführungsbeispiel wird die der Ablöseschicht entgegengesetzte Oberfläche der Dekorlage im zweiten Flächenbereich vollflächig mit einer Kleberschicht versehen und zur Individualisierung wird auf die Kleberschicht im zweiten Flächenbereich eine musterförmige Farbschicht aufgebracht. Die Formgebung der Farbschicht entspricht hierbei der Formgebung der individualisierten maschinenlesbaren optischen Markierung. Die Transparenz der individualisierbaren Schicht ist hierbei so gewählt, dass sie mindestens 20 % höher, bevorzugt mindestens 70 % höher als die Transparenz der Farbschicht gewählt wird. Vorzugsweise werden hierbei die individualisierbaren Schichten so gewählt, dass deren Gesamttransparenz höher als 75 %, weiter bevorzugt von 90 % ist und die Farbschicht so gewählt, dass deren Transparenz geringer als 25 %, bevorzugt geringer als 10 % ist. Die individualisierbare Schicht kann dabei Teilbereiche und/oder Teilschichten mit unterschiedlicher Transparenz oder Transluzenz aufweisen, die zusammen ein insbesondere musterförmiges Dekor bilden und gemeinsam eine o.g. Gesamttransparenz und dadurch im Vergleich zu der Farbschicht einen entsprechenden Kontrast aufweisen. Der entsprechende Kontrast kann dabei im Spektrum des für das menschliche Auge sichtbaren Lichts bei Normallicht vorhanden sein oder aber bei Beleuchtung mit Licht außerhalb des sichtbaren Spektrums, z.B. UV-Licht oder IR-Licht. Dafür können z.B. UV-fluoreszierende Farben verwendet werden, um einen entsprechenden Kontrast zu erzeugen. Beim Transferieren wird das Transferband im zweiten Flächenbereich mittels eines Prägewerkzeugs vollflächig gegen die zu dekorierende Oberfläche gepresst. Anschließend wird das Transferband von der zu dekorierenden Oberfläche abgezogen, wobei die Transferlage im zweiten Flächenbereich auf der zu dekorierenden Oberfläche verbleibt.

Vorzugsweise wird hierbei die Bruchkraft der individualisierbaren Schichten so gewählt, dass die individualisierbaren Schichten im zweiten Flächenbereich beim Abziehen des Transferbandes auf der zu dekorierenden Oberfläche verbleiben, trotz der unterschiedlichen Haftkräfte an der zu dekorierenden Oberfläche, in den mit der Farbschicht versehenen Teilbereichen des zweiten Flächenbereichs einerseits und den nicht mit der Farbschicht versehenen Teilbereichen des zweiten Flächenbereichs andererseits. Durch die entsprechende Einstellung der Bruchkraft der individualisierbaren Schichten - auch in Abhängigkeit von der Flächenausdehnung der aufgebrachten musterförmigen Farbschicht - wird sichergestellt, dass durch die Unterschiede in der Haftkraft zwischen diesen Teilbereichen keine Durchtrennung der individualisierbaren Schichten an den Grenzlinien zwischen diesen Teilbereichen erfolgt.

Weiter ist es in dem nicht erfindungsgemäßen Ausführungsbeispiel auch möglich, als musterförmige Farbschicht eine eingefärbte Kleberschicht auf die Kleberschicht aufzubringen.

Die musterförmige Farbschicht wird hierbei bevorzugt mittels eines Tintenstrahldruckers, mittels eines Laserdruckers oder auch durch Transfer von einer Transferfolie mittels eines Thermotransferdruckkopfes auf das Transferband aufgebracht, wie bereits oben beschrieben. Die Farbschicht weist hierbei bevorzugt eine stark kontrastierende Farbe zu der Farbe der zu dekorierenden Oberfläche auf, wobei die Farbschicht bevorzugt in Schwarz oder in einer Primärfarbe wie Rot oder Grün oder Blau eingefärbt ist.

Die Schichtdicke der musterförmigen Farbschicht beträgt in dem nicht erfindungsgemäßen Ausführungsbeispiel vorzugsweise zwischen 0,1 und 20 µm, bevorzugt zwischen 0,2 µm und 5 µm.

Die musterförmige Farbschicht oder als musterförmige Farbschicht verwendete eingefärbte Kleberschicht sollte in dem nicht erfindungsgemäßen Ausführungsbeispiel vorzugsweise chemisch ähnlich zu der Kleberschicht sein, um eine gute chemische und physikalische Verträglichkeit zwischen beiden Schichten und eine gleichmäßige Haftung beider Schichten auf der zu dekorierenden Oberfläche und damit eine gute Beständigkeit der Dekoration gegenüber äußeren Einflüssen zu erreichen. Vorteilhaft ist es dabei, wenn sich die Kleberschicht und die darauf aufgebrachte Farbschicht oder eingefärbte Kleberschicht an ihren Grenzflächen zueinander leicht durchmischen. Diese Durchmischung kann in Tiefenrichtung und seitlich im Mikrometerbereich erfolgen und beeinflusst die Randschärfe bzw. Genauigkeit so gut wie nicht.

Nach einem zweiten Aspekt der Erfindung wird die der Ablöseschicht entgegengesetzte Oberfläche der Dekorschicht im zweiten Flächenbereich mit einer Kleberschicht versehen, wie dies bereits oben ausgeführt worden ist. Zur Individualisierung werden ein oder mehrere der individualisierbaren Schichten musterförmig zur Ablation dieser Schichten oder Erzielung eines Farbumschlags in diesen Schichten mit Laserstrahlung bestrahlt. Die Formgebung der bestrahlten Teilbereiche des zweiten Flächenbereichs entspricht hierbei der Formgebung der individualisierten maschinenlesbaren optischen Markierungen in Negativform. Beim Transferieren des Transferbandes wird der zweite Flächenbereich mittels eines Prägewerkzeugs gegen die zu dekorierende Oberfläche gepresst. Die individualisierbaren Schichten verbleiben beim Abziehen des Transferbandes auf der zu dekorierenden Oberfläche. Die individualisierbaren Schichten können vor oder nach dem Transferieren auf die zu dekorierende Oberfläche zur Individualisierung mit der energiereichen Strahlung bestrahlt werden.

Die bestrahlten individualisierbaren Schichten sind vorzugsweise aus der Gruppe: metallische Schichten, laser-bleichbare Farbschichten und mittels Laser zu einem Farbumschlag anregbare Schichten ausgewählt. So handelt es sich bei einer bestrahlten individualisierbaren Schicht beispielsweise um eine Metallschicht einer Dicke zwischen 5 und 200 nm, bevorzugt zwischen 20 nm und 100 nm, welche bei Bestrahlung mit einem Laser verdampft wird und damit in dem bestrahlten Bereich abgetragen wird, sodass sich dieser Bereich optisch deutlich von den umgebenden Bereichen abhebt. Die Bestrahlung erfolgt erfindungsgemäß mit einem Laser nach dem Aufbringen der Kleberschicht.

Bei den oben beschriebenen Verfahren wird weiter vorzugsweise auf die der Ablöseschicht entgegengesetzten Oberfläche der Dekorlage eine Kleberschicht vollflächig zumindest in den ersten Flächenbereichen, vorzugsweise zumindest in den ersten und zweiten Flächenbereichen insbesondere mittels Siebdruck oder Tiefdruck aufgebracht. Beim Transferieren wird das Transferband vorzugsweise in einem ersten Flächenbereich mittels einem der Formgebung des Dekorelements entsprechenden Prägewerkzeug gegen die zu dekorierende Oberfläche gepresst. Anschließend wird das Transferband von der zu dekorierenden Oberfläche abgezogen. Hierbei verbleibt das Dekorelement auf der zu dekorierenden Oberfläche. Die das Dekorelement umgebenden Bereiche der Dekorlage verbleiben wiederum auf dem Transferband und werden beim Abziehen von dem Dekorelement getrennt.

Als Kleberschicht und/oder als musterförmige Kleberschichten werden in den oben beschriebenen Verfahren bevorzugt durch Hitze und/oder Druck aktivierbare Kleberschichten verwendet. Als Prägewerkzeug wird hierbei vorzugsweise auch ein beheiztes Prägewerkzeug verwendet, sodass durch den von dem Prägewerkzeug vermittelten Druck und die durch das Prägewerkzeug vermittelte Hitze die Kleberschichten aktiviert werden und damit der Bereich, auf dem das Prägewerkzeug aufliegt, an der zu dekorierenden Oberfläche anhaftet.

Es hat sich bewährt, dass die ersten Flächenbereiche in einer konstanten Rasterweite voneinander beabstandet sind und dass jedem ersten Flächenbereich ein zweiter Flächenbereich zugeordnet ist, wobei die zweiten Flächenbereiche ebenfalls in einer konstanten Rasterweite voneinander beabstandet sind und in jeweils gleichartiger Lage zum jeweils zugeordneten ersten Flächenbereich auf dem Transferband angeordnet sind. Hierdurch wird ein registergenaues Aufbringen der Dekorelemente und der individualisierten maschinenlesbaren optischen Markierungen sowie eine effektive Ausnutzung der auf dem Transferband zur Verfügung stehenden Fläche gewährleistet.

Weiter hat es sich bewährt, dass die zweiten Flächenbereiche eine Abmessung zwischen 5 × 5 mm und 50 x 50 mm, bevorzugt zwischen 7 × 7 mm und 20 x 20 mm, weiter bevorzugt zwischen 10 x 10 mm und 20 x 20 mm besitzen. Die ersten Flächenbereiche besitzen bevorzugt eine Abmessung zwischen 5 × 5 mm und 50 x 50 mm, weiter bevorzugt zwischen 10 x 10 mm und 30 x 30 mm.

Gemäß einer bevorzugten Variante der Erfindung überlappen sich die ersten und zweiten Flächenbereiche nicht. Bevorzugt ist hier der erste Flächenbereich von jedem zweiten Flächenbereich zumindest 0,5 mm beabstandet, vorzugsweise zumindest 1 mm, besonders bevorzugt zumindest 3 mm beabstandet. Dieser Abstand ist von den beim Transferieren bestehenden Prozesstoleranzen und auch von der Größe einer möglicherweise benötigten, die individualisierten maschinenlesbaren optischen Markierungen, insbesondere allseitig flächenmäßig umschließenden Ruhezone abhängig.

Hierbei hat es sich bewährt, dass beim Transferieren das Transferband mittels eines Prägewerkzeugs gegen die zu dekorierende Oberfläche gepresst wird, welches eine erste erhabene Prägefläche aufweist, deren Formgebung der Formgebung des Dekorelements entspricht, und eine zweite erhabene Prägefläche aufweist, deren Formgebung der Formgebung des zweiten Flächenbereichs entspricht. Das Transferband wird weiter bevorzugt vor der Transferierung mittels einer Registriervorrichtung derart in Bezug auf das Prägewerkzeug ausgerichtet, dass die erste Prägefläche im Bereich eines ersten Flächenbereichs auf das Transferband auftrifft und die zweite Prägefläche im Bereich eines weiteren Flächenbereichs auf das Transferband auftrifft. Hierzu ist auf dem Transferband vorzugsweise eine Abfolge von Registriermarken aufgebracht, welche mittels eines Sensors, insbesondere eines optischen Sensors, von der Registrierungsvorrichtung erfasst werden. Anhand der Lage der Registriermarken steuert die Registrierungsvorrichtung ein oder mehrere Transportvorrichtungen entsprechend an, sodass das Prägewerkzeug wie oben beschrieben auf das Transferband auftrifft.

Es ist möglich, dass die ersten Flächenbereiche in ihrer Formgebung exakt der Formgebung der Dekorelemente entsprechen. Es hat sich jedoch weiter bewährt, dass die ersten Flächenbereiche großflächiger als die Dekorelemente ausgeformt sind und die Dekorelemente in jede Richtung zumindest um 1 bis 5 mm, weiter bevorzugt um 1,5 mm überragen. Hierdurch können gegebenenfalls auftretenden Registerungenauigkeiten ausgeglichen werden. Falls die Ausformung der ersten Flächenbereiche exakt der Ausformung der Dekorelemente entspricht ist es weiter auch möglich, dass der Prägestempel geringfügig großflächiger als die Dekorelemente ausgeformt ist, um so ebenfalls gegebenenfalls auftretende Registerungenauigkeiten ausgleichen zu können.

Gemäß einem bevorzugten Ausführungsbeispiel der Erfindung unterscheidet sich die Dekorlage in den ersten Flächenbereichen einerseits und den zweiten Flächenbereichen andererseits. Insbesondere besitzt die Dekorlage in den ersten Flächenbereichen einerseits und in den zweiten Flächenbereichen andererseits eine unterschiedliche Abfolge von Schichten oder weist dort unterschiedliche Schichten auf. Hierdurch ist es möglich, dass sich der optische Eindruck der Dekorelemente von dem optischen Eindruck der individualisierten maschinenlesbaren optischen Markierung deutlich unterscheidet.

Beispielsweise kann die Dekorlage in den ersten Flächenbereichen eine Replizierschicht mit zumindest bereichsweise abgeformter Reliefstruktur sowie eine vorzugsweise opake oder weitgehend opake metallische Reflektionsschicht insbesondere benachbart zu der Replizierschicht aufweisen, wogegen in den zweiten Flächenbereichen die metallische Reflektionsschicht und/oder die Replizierschicht nicht vorhanden ist. Dabei kann die Dekorlage eine in den ersten und zweiten Flächenbereichen vollflächig aufgebrachte Ablöseschicht und/oder eine vollflächig aufgebrachte Kleberschicht aufweisen. In den zweiten Flächenbereichen ohne metallische Reflektionsschicht kann die Dekorlage transparent oder transluzent sein, wodurch z.B. eine auf die Kleberschicht in den zweiten Flächenbereichen aufgebrachte musterförmige Farbschicht mit ausreichendem Kontrast als individualisierte maschinenlesbare optische Markierung durch die Dekorlage hindurch erkennbar sein kann. Die in den zweiten Flächenbereichen nicht vorgesehene metallische Reflektionsschicht kann dort entweder nachträglich entfernt worden sein, beispielsweise mittels Ätzverfahren oder Waschverfahren, oder dieser Bereich beim Aufbringen der HRI-Schicht ausgespart worden sein, beispielsweise mittels einer Maske.

Alternativ dazu kann die Dekorlage in den ersten Flächenbereichen eine Replizierschicht mit zumindest bereichsweise abgeformter Reliefstruktur sowie eine insbesondere benachbart zu der Replizierschicht angeordnete transparente oder weitgehend transparente HRI-Schicht (HRI = High Refraction Index) als nichtmetallische Reflektionsschicht aufweisen, wodurch die Dekorlage in den ersten Flächenbereichen weitgehend transparent oder transluzent sind. In den zweiten Flächenbereichen ist dagegen eine Replizierschicht mit zumindest bereichsweise abgeformter Reliefstruktur sowie eine vorzugsweise opake oder weitgehend opake metallische Reflektionsschicht insbesondere benachbart zu der Replizierschicht angeordnet und die Dekorlage in den zweiten Flächenbereichen dadurch weitgehend opak, wobei zur Individualisierung die metallische Reflektionsschicht in den zweiten Flächenbereichen musterförmig insbesondere durch Einwirken energiereicher Laserstrahlung abgetragen bzw. ablatiert wird, um so eine musterförmig transparente Dekorlage in den zweiten Flächenbereichen zu bilden. Alternativ zu der Replizierschicht mit benachbarter metallischer opaker Reflektionsschicht kann in den zweiten Flächenbereichen auch eine opake oder weitgehend opake Farbschicht angeordnet sein, die musterförmig insbesondere durch Einwirken energiereicher Laserstrahlung abgetragen bzw. ablatiert wird, um so eine musterförmig transparente Dekorlage in den zweiten Flächenbereichen zu bilden. Die in den zweiten Flächenbereichen nicht vorgesehene HRI-Schicht kann dort entweder nachträglich entfernt worden sein, beispielsweise mittels Ätzverfahren oder Waschverfahren, oder dieser Bereich beim Aufbringen der HRI-Schicht ausgespart worden sein, beispielsweise mittels einer Maske. Die in den ersten Flächenbereichen nicht vorgesehene metallische Reflektionsschicht oder Farbschicht kann dort entweder nachträglich entfernt worden sein, beispielsweise mittels Ätzverfahren oder Waschverfahren, oder dieser Bereich beim Aufbringen der HRI-Schicht ausgespart worden sein, beispielsweise mittels einer Maske.

Gemäß eines weiteren bevorzugten Ausführungsbeispiels der Erfindung ist es auch möglich, dass die ersten und zweiten Flächenbereiche überlappend und/oder ineinander geschachtelt angeordnet sind. Beispielsweise können die ersten Flächenbereiche zumindest bereichsweise einen Rahmen für die zweiten Flächenbereiche bilden, wobei die zweiten Flächenbereiche ganz oder teilweise innerhalb des Rahmens angeordnet sind.

Die ersten und zweiten Flächenbereiche können jeweils eine Replizierschicht mit zumindest bereichsweise abgeformter Reliefstruktur und jeweils eine vorzugsweise semitransparente oder opake oder weitgehend opake, insbesondere metallische Reflexionsschicht insbesondere benachbart zu der Replizierschicht aufweisen. Die Dekorlage ist in den zweiten Flächenbereichen semitransparent oder opak oder weitgehend opak, wobei zur Individualisierung die metallische Reflektionsschicht in den zweiten Flächenbereichen musterförmig insbesondere durch Einwirken energiereicher Laserstrahlung abgetragen bzw. ablatiert wird, um so eine musterförmig weitgehend transparente Dekorlage in den zweiten Flächenbereichen zu bilden. Durch das Ablatieren der Reflexionsschicht in den zweiten Flächenbereichen kann der durch die Reliefstrukturen in der Replizierschicht erzeugte optisch variable Effekt in seiner optischen Wirkung verändert, insbesondere verringert werden.

Entsprechend können die Beschaffenheit und Ausgestaltung der Reliefstrukturen in den ersten und zweiten Bereichen angepasst werden, um das optische Erscheinungsbild der ersten und zweiten Flächenbereiche zu optimieren, weil die Reliefstrukturen auf einer weitgehend vorhandenen Reflektionsschicht anders, insbesondere besser erkennbar sind als auf einer musterförmig entfernten Reflektionsschicht. Beispielsweise können in den ersten Flächenbereichen mittels Reliefstrukturen Motive, Logos, alphanumerische Zeichen oder ähnliche filigrane Elemente generiert werden, für deren optimale Erkennbarkeit eine weitgehend vollflächige Reflexionsschicht notwendig ist. Beispielsweise können in den zweiten Flächenbereichen mittels Reliefstrukturen kontinuierliche Farbverläufe oder flächige Farbwechseleffekte oder ähnliche flächig grob strukturierte Elemente generiert werden, für deren gute Erkennbarkeit eine nur bereichsweise vorliegende Reflexionsschicht ausreichend ist. Derartige in der Fläche grob strukturierte Elemente können die Auslesbarkeit der individualisierten optische Markierung erleichtern, weil möglicherweise während des Auslesens störende optische Effekte verringert sind. Ebenso ist es vorteilhaft, die Art der Reliefstrukturen auf die möglichst gute Auslesbarkeit der individualisierten optischen Markierung anzupassen und die Auslesbarkeit störende optische Effekte zu vermeiden.

Je nach eingesetztem Lesegerät kann es dazu insbesondere vorteilhaft sein, Reliefstrukturen zu verwenden, die nur unter bestimmten optischen Bedingungen (Beleuchtungsstärke, -richtung, -polarisation) sichtbar sind.

Alternativ oder zusätzlich zu der Replizierschicht mit benachbarter metallischer opaker Reflektionsschicht kann in den zweiten Flächenbereichen auch eine opake oder weitgehend opake Farbschicht angeordnet sein, die musterförmig insbesondere durch Einwirken energiereicher Laserstrahlung abgetragen bzw. ablatiert wird, um so eine musterförmig transparente Dekorlage in den zweiten Flächenbereichen zu bilden.

Es kann vorteilhaft sein, die Reflexionsschicht der individualisierten optischen Markierung lagegenau, d.h. im Register zu optisch variablen Reliefstrukturen auszubilden.

Weiter ist es vorteilhaft, wenn unterschiedlich ausgebildete Reliefstrukturen unterschiedliche Bestandteile der individualisierten optischen Markierung bilden und separat auslesbar sind. Beispielsweise unterscheiden sich diese Reliefstrukturen in ihren Strukturparametern wie Azimutwinkel, Spatialfrequenz, Strukturtiefe oder Korrelationslänge oder ihrer Reliefform (Sägezahn, Dreieck, Rechteck, Sinus, Halbkreis, Gaußsche Glockenform etc.). Je nach eingesetztem Lesegerät und/oder vorherrschenden Beleuchtungsbedingungen können Teile der individualisierten optischen Markierung insbesondere aufgrund der optischen Wirkung der Reliefstrukturen ausgelesen werden und andere Teile der individualisierten optischen Markierung bilden entweder dafür den Hintergrund oder die Umgebung und/oder können bei anderen Beleuchtungsbedingungen und/oder mit einem anderen Lesegerät ausgelesen werden. Beispielsweise ist es dadurch möglich, mit Hilfe der Reliefstrukturen eine individualisierte optische Markierung zu bilden, die zu einem Teil mit einem herkömmlichen Lesegerät, beispielsweise einer Kamera mit Bildverarbeitungseinrichtung ausgelesen werden kann. Innerhalb dieser individualisierten optischen Markierung ist zusätzlich eine weitere Information enthalten, die mit dem herkömmlichen Lesegerät nicht auslesbar ist und dabei auch nicht störend in Erscheinung tritt. Erst bei einem Wechsel der Beleuchtungsbedingungen und/oder des Lesegerätes kann diese zweite Information ausgelesen werden. Beispielsweise kann die Beleuchtungsstärke, - richtung oder -polarisation geändert werden und/oder entsprechende Änderungen am Lesegerät, z.B. Aufsetzen eines Polarisators, eines Farbfilters oder einer Zusatzoptik, vorgenommen werden.

Die Ablation der Reflexionsschicht kann in vorteilhafter Weise beispielsweise mittels eines Laserstrahls, insbesondere mittels eines Festkörperlasers, z.B. eines Nd:YAG- oder eines Nd:YVO₄-Lasers (Nd = Neodym, Y = Ytterbium, V= Vanadat, A = Aluminium, G = Granat) mit einer Grundwellenlänge (λ = 1064 nm) erfolgen. Die Grundwellenlänge kann auch verdoppelt (λ = 532 nm) oder verdreifacht (λ = 355 nm) angewandt werden. Ebenso möglich ist der Einsatz eines Faser-Laser oder eines Gas-Laser, z.B. eines CO₂-Laser, auch mit abweichenden Wellenlängen. Die Laserstrahlung wirkt insbesondere in gepulster Form auf die Reflexionsschicht ein, wobei die Pulse eine Länge zwischen 5 ns und 200 ns, bevorzugt zwischen 10 und 20 ns und Pulswiederholfrequenzen zwischen 1 und 100 kHz, bevorzugt zwischen 10 und 20 kHz haben.

Die Ablation der Reflexionsschicht erfolgt, indem pro Laserpuls eine bestimmte Fläche der Reflexionsschicht, hier Laserpixel genannt, abgetragen wird. Die kleinste Kantenlänge oder kleinster Durchmesser eines Laserpixels hat eine Größe zwischen 5 und 500 µm, bevorzugt zwischen 20 und 120 µm.

Die Replizierschichten der ersten und/oder zweiten Flächenbereiche ist bevorzugt in den Bereichen, in welchen die ersten und zweiten Flächenbereichen aneinander angrenzen, als eine Ruhezone für die individualisierte optische Markierung ausgebildet sein, das heißt als eine Zone ohne optisch variable Effekte und ohne Muster, Markierungen, Dekorationen oder andere, den Auslesevorgang möglicherweise behindernden optischen Markierungen. Dafür ist es vorteilhaft, wenn die Replizierschicht in der Ruhezone entweder keine Reliefstrukturen oder stochastische Mattstrukturen oder Mottenaugenstrukturen aufweist, sodass das optische Erscheinungsbild in der Ruhezone möglichst gleichmäßig ist und keine störenden Muster, Markierungen oder Effekte aufweist. Zusätzlich ist es vorteilhaft, in dieser Ruhezone die Reflexionsschicht vollständig oder zu einem überwiegenden Teil zu entfernen, um einen möglichen optisch variablen Effekt zu unterdrücken. Alternativ kann ein Freiraum zwischen den ersten und zweiten Flächenbereichen vorgesehen sein, der als Ruhezone dienen kann und wodurch die ersten und zweiten Flächenbereiche voneinander beabstandet sind und nicht direkt aneinander angrenzen. In diesem Freiraum können die Replizierschicht und/oder die Reflexionsschicht und/oder weitere nicht vorhanden oder ausgespart sein.

Die Dekorlage kann in den Überlappungsbereichen der ersten und zweiten Flächenbereiche vorzugsweise eine vollflächige oder partielle HRI-Schicht aufweisen.

Die individualisierbare maschinenlesbare optische Markierung besteht vorzugsweise aus einem eindimensionalen oder zweidimensionalen Barcode, beispielsweise ausgebildet als Matrixcode, z.B. Azteccode, QR-Code (QR = Quick Response), Composite Code (kombinierte Codes unterschiedlicher Art), Farbbarcode. Die einen oder mehreren individualisierbaren Schichten werden damit - wie oben beschrieben - in Form eines eindimensionalen oder zweidimensionalen Barcodes individualisiert. Es ist jedoch auch möglich, dass als maschinenlesbare optische Markierung auch Zahlen- und/oder Buchstabenfolgen verwendet werden.

Ein zweidimensionaler Barcode besteht aus sogenannten Modulen, d.h. einzelnen Datenpunkten oder Pixeln, die in zweidimensionaler Ausdehnung (Fläche) angeordnet sind und zusammen Daten in grafisch verschlüsselter Form darstellen. Eine bevorzugte und mit internationalen Normen harmonierende Anzahl von Modulen eines zweidimensionalen Barcodes (Data Matrix Code ECC200) liegen im Bereich von 10 x 10 Modulen (= 100 Module) bis 144 x 144 Modulen (= 20736 Module) an. In der maximalen Modulanzahl 144 x 144 lassen sich bis zu 3116 Zahlen oder 2335 ASCII-Zeichen, insgesamt 1558 Bytes, unterbringen. Ein zweidimensionaler Barcode soll mindestens 10 x 10 Module enthalten. Ein QR-Code enthält zwischen 21 x 21 und 177 x 177 Module. Zusätzlich enthält ein QR-Code spezielle Funktions-Muster zur Ausrichtung und Positionierung des Lesegeräts. Die Module enthalten die Daten in redundanter Form, sodass die verschlüsselten Daten auch dann noch entschlüsselt werden können, wenn ein Teil des Codes unleserlich, z.B. zerstört oder überdeckt ist. Ein QR-Code kann zusätzlich zu den Modulen und den Funktions-Mustern noch weitere grafische, insbesondere unverschlüsselte oder auf andere Weise verschlüsselte Motive, beispielsweise Buchstaben, Ziffern, Symbole, Logos, ein Halbtonbild, ein mehrfarbiges, insbesondere mit digitalem Wasserzeichen versehenen Bild, einen Strichcode, einen Zahlencode etc. enthalten, wobei diese grafischen Motive innerhalb des Flächenbereichs des QR-Codes angeordnet sein können. Beispielsweise kann ein Logo etwa mittig in dem QR-Code vorgesehen sein, wobei Module und Funktions-Muster das Logo vorzugsweise allseitig umschließen. Die Flächenausdehnung eines zweidimensionalen Barcodes richtet sich nach der Anzahl der Module und der Flächenausdehnung eines einzelnen Moduls. Die Flächenausdehnung eines einzelnen Moduls richtet sich wiederum nach dem Auflösungsvermögen bzw. den Lesefähigkeiten der eingesetzten Lese- oder Entschlüsselungsgeräte. Dies können beispielsweise spezielle Barcodescanner sein, aber auch Mobiltelefone oder andere insbesondere mobile elektronische Geräte, die mit einer Kamera und vorzugsweise einer Netzwerkverbindung und/oder einer Entschlüsselungssoftware für Barcodes ausgerüstet sind. In der Praxis hat es sich bewährt, wenn ein einzelnes Modul eine kleinste Ausdehnung in einer Richtung von 0,1 mm bis 1 mm aufweist, bevorzugt von 0,3 mm bis 0,75 mm. Diese Modulgröße ist von den meisten Lese- oder Entschlüsselungsgeräten innerhalb erlaubter Toleranzen detektierbar. Bei einer Modulgröße von 0,5 mm und einer Modulanzahl von 21 x 21 ergibt sich eine Flächenausdehnung des zweidimensionalen Barcodes von 10,5 x 10,5 mm. Bei einer Modulgröße von 0,75 mm und einer Modulanzahl von 12 x 12 ergibt sich eine Flächenausdehnung des zweidimensionalen Barcodes von 9 × 9 mm. Mit 12 x 12 = 144 Modulen sind 10-stellige Codes darstellbar, wodurch es möglich ist, 10¹⁰ verschiedene Codes und damit 10¹⁰ unterschiedliche Barcodes zu generieren. Vorzugsweise ist flächenmäßig benachbart zu einen zweidimensionalen Barcode, vorzugsweise diesen allseitig umschließend eine sogenannte Ruhezone vorgesehen. In dieser Ruhezone sollen keine Muster, Markierungen, Dekorationen oder andere, den Auslesevorgang möglicherweise behindernden optischen Markierungen vorhanden sein. Die Ruhezone beträgt bevorzugt mindestens eine Modulbreite/Modullänge, z.B. zwischen 0,1 mm und 5 mm, bevorzugt zwischen 0,1 mm und 2 mm. Für Anwendungen mit mittleren bis starken optischen "Rauschens", d.h. optischen Störeffekten der Umgebung, in unmittelbarer Nähe zum Symbol, wird eine minimale Ruhezone von 2 bis 4 Modulbreiten/Modullängen empfohlen, z.B. zwischen 0,5 mm und 5 mm. Sie ist somit abhängig von der Modulgröße. Für einen möglichst sicheren und störungsarmen Auslesevorgang des Barcodes ist es vorteilhaft, wenn der Barcode einen möglichst hohen Kontrast aufweist. Bevorzugt sollte der Kontrast mindestens 20 %, insbesondere mindestens 70 % betragen. Die Prozentwerte sollen den Unterschied des Reflexions- oder Absorptionsvermögens der Module zu einem Hintergrund darstellen.

Die Ablation der Reflexionsschicht eines Moduls erfolgt vorzugsweise mittels mehrerer Laserpulse. Jeder Laserpuls entfernt die Reflexionsschicht mit einer Fläche eines Laserpixels. Dabei bilden vorzugsweise mehrere Laserpixel ein Modul, wobei bevorzugt eine flächenmäßige Überlappung benachbarter Laserpixel vorgesehen ist, z.B. zwischen 0 und 80% Überlappung, bevorzugt zwischen 10% und 50% Überlappung, um eine vollständige Abtragung der Reflexionsschicht zu erreichen und Reste von Reflexionsschicht zwischen benachbarten Laserpixeln zu vermeiden. Es ist jedoch auch möglich, dass ein Laserpixel allein ein Modul bildet, das heißt, dass ein einzelner, ausreichend starker Laserpuls ein Modul erzeugt. Je kleiner ein Laserpixel ist, desto geringer ist die benötigte Laserleistung bzw. Laserpulsenergie zum Ablatieren der Reflexionsschicht im Flächenbereich des Laserpixels. Je mehr Laserpixel ein Modul bilden, desto genauer kann die Außenkontur des Moduls erzeugt werden und desto besser ist die Lesbarkeit des Codes aus mehreren, vorzugsweise benachbarten Modulen. Je mehr Laserpixel ein Modul bilden, desto länger dauert das Ablatieren eines gesamten Moduls. Bildet ein einziges Laserpixel ein Modul, bestimmt die Strahlformungsoptik und/oder Strahlformungsmechanik des Lasers, wie genau die Außenkontur des Laserpixels und damit die Außenkontur des Moduls ausgebildet ist. Je nach Art des Codes und der Art der späteren Auslesbarkeit ist die damit erzeugte Exaktheit der Module ausreichend.

Beispielsweise bilden bei einer Laserpixel-Größe von 40 µm x 40 µm, einer Modulgröße von 500 µm x 500 µm und einer Überlappung benachbarter Laserpixel von 25% 16,67 x 16,67 = 277,8 Laserpixel ein Modul. Bei einer Laserpixel-Größe von 80 µm x 80 µm, einer Modulgröße von 500 µm x 500 µm und einer Überlappung benachbarter Laserpixel von 25% bilden 8,33 x 8,33 = 69,4 Laserpixel ein Modul. Beträgt die Pulswiederholfrequenz beispielsweise 10 kHz, d.h. erfolgt alle 100 µs = 0,0001 s ein Laserimpuls, so dauert das Ablatieren eines Moduls mit einer Modulgröße von 500 µm x 500 µm aus 277,8 Laserpixeln bei 25% Überlappung der Laserpixel etwa 0,0278 s oder ein Modul mit einer Modulgröße von 500 µm x 500 µm aus 69,4 Laserpixeln bei 25% Überlappung der Laserpixel etwa 0,00694 s. Bei einem Code mit einer Modulgröße von 500 µm x 500 µm, 277,8 Laserpixeln pro Modul und 21 x 21 Modulen, davon sind im Mittel etwa 50% = 220 Module zu entfernen, dauert das Ablatieren eines Codes, das heißt das Entfernen von 220 Modulen bei 25% Überlappung derLaserpixel und bei einer Pulswiederholfrequenz von 10 kHz etwa 6,1 s. Bei einem Code mit einer Modulgröße von 500 µm x 500 µm, 69,4 Laserpixeln pro Modul und 21 x 21 Modulen, davon sind etwa 50% = 220 Module zu entfernen, dauert das Ablatieren eines Codes bei 25% Überlappung der Laserpixel und bei einer Pulswiederholfrequenz von 10 kHz etwa 1,5 s.

Gemäß eines bevorzugten Ausführungsbeispiels der Erfindung umfasst die Dekorlage in den ersten Flächenbereichen mit den optisch variablen Dekorelementen jeweils eine oder mehrere optisch aktive Schichten, welche durch Interferenz und/oder Beugung des einfallenden Lichtes in Abhängigkeit von dem Einfallswinkel des einfallenden Lichts und/oder der Betrachtungsrichtung unterschiedliche Bildinformationen und/oder unterschiedliche Farben zeigen. Bevorzugt weist die Dekorlage in den ersten Flächenbereichen mit den optisch variablen Dekorelementen jeweils eine Replizierschicht mit einer in einer Oberfläche oder Replizierschicht abgeformte Reliefstruktur, insbesondere umfassend eine diffraktive Reliefstruktur, eine Reliefstruktur eines Hologramms, eine Makrostruktur und/oder eine Linsenstruktur, eine Volumenhologrammschicht mit einem Volumenhologramm, ein Dünnfilmschichtsystem und/oder eine Schicht umfassend cholesterische Flüssigkristalle auf. Diese Schichten sind weiter bevorzugt noch mit einer Reflexionsschicht, beispielsweise einer metallischen Schicht oder einer HRI-Schicht, einer Lackschicht und/oder einer Schicht enthaltend optisch variable Pigmente oder lumineszente oder thermochrome Pigmente kombiniert.

Weiter ist es auch vorteilhaft, dass jedes der optisch variablen Dekorelemente eine verborgene Information enthält, welche mittels eines Verifizierungselements sichtbar gemacht werden kann. So kann das optisch variable Dekorelement beispielsweise ein spezielles Hologramm enthalten, dessen Information lediglich mittels einer monochromatischen Lichtquelle, beispielsweise einem Laserpointer, als Verifizierungselement sichtbar gemacht werden kann. Das Verifizierungselement kann auch ein Polarisationsfilter oder eine optische Linse oder ein optisches Linsenarray sein.

Im Hinblick auf ein nicht erfindungsgemäßes Ausführungsbeispiel kann vorgesehen sein, dass die der Ablöseschicht entgegengesetzte Oberfläche der Dekorlage im zweiten Flächenbereich vollflächig mit einer Kleberschicht versehen wird, dass zur Individualisierung auf die Kleberschicht im zweiten Flächenbereich eine musterförmige Deaktivierungsschicht aufgebracht wird, wobei die Formgebung der Deaktivierungsschicht der Formgebung der individualisierten maschinenlesbaren optischen Markierung in Negativform entspricht, dass beim Transferieren das Transferband im zweiten Flächenbereich mittels eines Prägewerkzeugs gegen die zu dekorierende Oberfläche gepresst wird, dass in den Teilbereichen, in denen die musterförmige Deaktivierungsschicht nicht zwischen der Kleberschicht und der zu dekorierenden Oberfläche angeordnet ist, die individualisierbaren Schichten beim Abziehen auf der zu dekorierenden Oberfläche verbleiben, und in den übrigen Teilbereichen des zweiten Flächenbereichs, in denen die Deaktivierungsschicht vorgesehen ist, die individualisierbaren Schichten auf dem Transferband verbleiben und beim Abziehen von den auf der zu dekorierenden Oberfläche verbleibenden Teilbereichen getrennt werden.

In dem nicht erfindungsgemäßen Ausführungsbeispiel kann weiterhin vorgesehen sein, dass die Deaktivierungsschicht Silikone enthält und/oder aus einem stark pigmentierten Lack, vorzugsweise mit einem Pigmentanteil von mehr als 30 Gewichtsprozent in getrocknetem Zustand besteht.

Alternativ kann vorgesehen sein, dass die der Ablöseschicht entgegengesetzte Oberfläche der Dekorlage im zweiten Flächenbereich vollflächig mit einer strahlenaktivierbaren oder strahlendeaktivierbaren Kleberschicht versehen wird, dass zur Individualisierung die Kleberschicht im zweiten Flächenbereich musterförmig mit einer zur Aktivierung bzw. Deaktivierung der Kleberschicht geeigneten Strahlenquelle musterförmig bestrahlt wird, wobei die Formgebung der bestrahlten Teilbereiche der Formgebung der individualisierten maschinenlesbaren optischen Markierung in Negativform entspricht, dass beim Transferieren das Transferband im zweiten Flächenbereich mittels eines Prägewerkzeugs gegen die zu dekorierende Oberfläche gepresst wird, dass in den Teilbereichen, in denen die Kleberschicht aktiviert bzw. nicht deaktiviert ist, die individualisierbaren Schichten beim Abziehen auf der zu dekorierenden Oberfläche verbleiben und in den übrigen Teilbereichen des zweiten Flächenbereichs die individualisierbaren Schichten auf dem Transferband verbleiben und beim Abziehen von den auf der zu dekorierenden Oberfläche verbleibenden Teilbereichen getrennt werden.

Im Hinblick auf ein nicht erfindungsgemäßes Ausführungsbeispiel kann weiterhin vorgesehen sein, dass die der Ablöseschicht entgegengesetzte Oberfläche der Dekorlage im zweiten Flächenbereich vollflächig mit einer Kleberschicht versehen wird, dass im zweiten Flächenbereich als Ablöseschicht eine strahlenvernetzbare Ablöseschicht vorgesehen wird, dass zur Individualisierung die Ablöseschicht im zweiten Flächenbereich musterförmig mit einer zur Vernetzung der Ablöseschicht geeigneten Strahlenquelle bestrahlt wird, wobei die Formgebung der bestrahlten Teilbereiche der Formgebung der individualisierten maschinenlesbaren optischen Markierung in Negativform entspricht, dass beim Transferieren das Transferband im zweiten Flächenbereich mittels eines Prägewerkzeugs gegen die zu dekorierende Oberfläche gepresst wird, dass in den Teilbereichen, in denen die Ablöseschicht nicht bestrahlt ist, die individualisierbaren Schichten beim Abziehen auf der zu dekorierenden Oberfläche verbleiben und in den übrigen Teilbereichen des zweiten Flächenbereichs, in denen die Ablöseschicht bestrahlt ist, die individualisierbaren Schichten auf dem Transferband verbleiben und beim Abziehen von den auf der zu dekorierenden Oberfläche verbleibenden Teilbereichen getrennt werden.

Es kann vorteilhaft sein, wenn die individualisierbaren Schichten eine vollflächige Metallschicht umfassen.

Im Hinblick das nicht erfindungsgemäße Ausführungsbeispiel kann alternativ vorgesehen sein, dass die der Ablöseschicht entgegengesetzte Oberfläche der Dekorlage im zweiten Flächenbereich vollflächig mit einer Kleberschicht versehen wird, dass zur Individualisierung auf die Kleberschicht im zweiten Flächenbereich eine musterförmige Farbschicht aufgebracht wird, wobei die Formgebung der Farbschicht der Formgebung der individualisierten maschinenlesbaren optischen Markierung entspricht und die Transparenz der individualisierbaren Schichten um mindestens 20 % höher als die Transparenz der Farbschicht gewählt wird, dass beim Transferieren das Transferband im zweiten Flächenbereich mittels eines Prägewerkzeugs vollflächig gegen die zu dekorierende Oberfläche gepresst wird und sodann das Transferband von der zu dekorierenden Oberfläche abgezogen wird.

In dem nicht erfindungsgemäßen Ausführungsbeispiel kann weiterhin vorgesehen sein, dass die Bruchkraft der individualisierbaren Schichten so gewählt wird, dass die individualisierbaren Schichten im zweiten Flächenbereich (22, 224) beim Abziehen des Transferbands auf der zu dekorierenden Oberfläche verbleiben, oder dass als musterförmige Farbschicht eine eingefärbte Kleberschicht auf die Kleberschicht aufgebracht wird.

Weiterhin kann es in dem nicht erfindungsgemäßen Ausführungsbeispiel vorteilhaft sein, wenn die ein oder mehreren individualisierbaren Schichten eine opake Schicht, insbesondere eine opake Metallschicht oder eine opake Lackschicht umfassen, welche durch die Bestrahlung in dem bestrahlten Teilbereich, insbesondere durch deren Ablation, transparent wird.

Weiterhin kann es vorteilhaft sein, wenn in dem Überlappungsbereich der ersten und zweiten Flächenbereiche eine vollflächige oder partielle HRI-Schicht vorgesehen ist.

Weiterhin kann ein Transferband zur Dekoration von Oberflächen, insbesondere zur Dekoration von Umverpackungen, vorgesehen sein, wobei das Transferband eine bandförmige Trägerfolie, eine Dekorlage und eine zwischen der Dekorlage und der Trägerfolie angeordnete Ablöseschicht aufweist, wobei die Dekorlage eine Vielzahl von gleichartigen optisch variablen Dekorelementen aufweist, die in voneinander getrennten und in Längsrichtung des Transferbands voneinander beabstandeten ersten Flächenbereichen angeordnet sind, und wobei die Dekorlage voneinander getrennte und in Längsrichtung des Transferbands voneinander beabstandete zweite Flächenbereiche aufweist, in denen die Dekorlage ein oder mehrere individualisierbare Schichten zur Bereitstellung von jeweils unterschiedlichen maschinenlesbaren optischen Markierungen aufweist,

Weiterhin kann eine Verpackung, insbesondere Umverpackung für Zigaretten, mit einem Trägermaterial, einem auf dem Trägermaterial mittels eines Transferbandes aufgebrachten optisch variablen Dekorelement und einer mittels desselben Transferbandes auf dem Trägermaterial aufgebrachten individualisierten maschinenlesbaren optischen Markierung vorgesehen sein.

Weiterhin kann ein Substratblatt mit einem Trägermaterial, einem auf dem Trägermaterial mittels eines Transferbandes aufgebrachten optisch variablen Dekorelement und einer mittels desselben Transferbandes auf dem Trägermaterial aufgebrachten individualisierten maschinenlesbaren optischen Markierung vorgesehen sein.

Im Folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung einer Draufsicht auf einen Ausschnitt eines Transferbandes.
- Fig. 2: zeigt eine schematische Darstellung eines Schnittbildes des Transferbandes nach Fig. 1.
- Fig. 3: zeigt eine schematische Darstellung eines Schnittbildes des Transferbandes nach Fig. 2 nach Durchführung eines Bearbeitungsschrittes.
- Fig. 4: zeigt eine schematische Darstellung eines Transferbandes in verschiedenen Bearbeitungsphasen.
- Fig. 5: zeigt eine schematische Schnittdarstellung mit einer dekorierten Oberfläche.
- Fig. 6: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine erste Ausführungsform.
- Fig. 7: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 8: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 9: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 10: zeigt eine Darstellung eines Ausschnittes aus einem Transferband, der Ausformung der bei der Transferierung verwendeten Prägestempel und eines transferierten Dekorelements und einer transferierten, individualisierten, maschinenlesbaren optischen Markierung für eine weitere Ausführungsform.
- Fig. 11: zeigt eine schematische Draufsicht auf verschiedene Ausführungsformen von ersten und zweiten Flächenbereichen, die überlappend oder ineinander geschachtelt angeordnet sind.

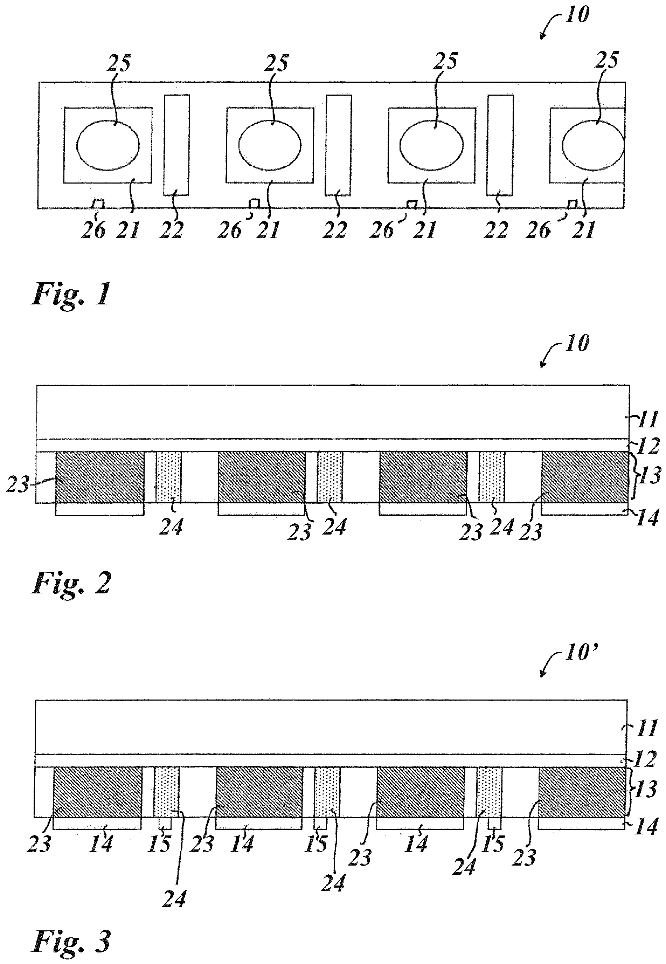

Fig. 1 und Fig. 2 zeigen einen Ausschnitt aus einem Transferband 10 mit mehreren Flächenbereichen 21 und 22 und Registermarken 26. Das Transferband 10 hat eine bandförmige Formgebung mit einer Breite, welche sich bevorzugt im Bereich von 5 mm bis 50 mm, bevorzugt von 15 mm bis 30 mm bewegt und einer Länge, welche vorzugsweise um den Faktor 500 größer als die Breite des Transferbandes 10 ist.

Das Transferband 10 weist eine bandförmige Trägerfolie 11, eine Ablöseschicht 12, eine Dekorlage 13 und eine partielle Kleberschicht 14 auf.

Bei der Trägerfolie 11 handelt es sich vorzugsweise um eine Kunststofffolie mit einer Schichtdicke zwischen 6 und 200 µm, weiter bevorzugt zwischen 12 und 36 µm. Die Trägerfolie besteht bevorzugt aus PET, BOPP, PVC, PC, PP.

Die Ablöseschicht 12 weist bevorzugt Wachskomponenten auf, welche bewirken, dass beim Erwärmen, insbesondere während eines Heißprägevorgangs, die durch die Ablöseschicht zwischen der Trägerfolie 11 und der Dekorlage 13 vermittelte Haftkraft verringert wird und so das Ablösen der Dekorlage von der Trägerfolie erleichtert wird.

Die Dekorlage 13 besteht aus einer oder mehreren Schichten. Die Dekorlage 13 weist hierbei eine oder mehrere optisch aktive, insbesondere optisch variable Schichten auf. Optisch variabel kann in diesem Zusammenhang bedeuten, dass der optisch wahrnehmbare Eindruck der Schicht in Abhängigkeit der Beleuchtungssituation und/oder des Blickwinkels variiert. Die optische Wahrnehmung kann dabei mit unbewaffnetem Auge erfolgen oder mit Hilfe von Polarisatoren, Vergrößerungs- oder Verkleinerungsoptiken oder anderen Hilfsmitteln. Diese optisch aktiven Schichten können hierbei von einer oder mehreren der folgenden Schichten gebildet werden:
Die Dekorlage 13 kann eine Replizierschicht mit vollflächig oder bereichsweise abgeformter Reliefstruktur aufweisen. Die Replizierschicht weist hierbei vorzugsweise eine Schichtdicke zwischen 0,1 und 5 µm, bevorzugt zwischen 0,2 µm und 2 µm auf und besteht aus einem thermoplastischen oder UVhärtbaren Replizierlack. In diese Replizierschicht wird mittels eines Prägestempels durch Einsatz von Hitze und Druck oder unter UV-Bestrahlung eine auf dem Prägestempel vorgesehene Reliefstruktur abgeformt. Bei dieser Reliefstruktur handelt es sich um eine optisch aktive Reliefstruktur. Die Reliefstruktur kann beispielsweise von einer diffraktiven Reliefstruktur gebildet werden, deren Spatialfrequenz zwischen 100 Linien/mm bis 3600 Linien/mm beträgt. Es kann sich hierbei weiter auch um eine holographische Reliefstruktur handeln, beispielsweise um die Reliefstruktur eines 2D/3D-Hologramms. Weiter kann es sich auch um die Reliefstruktur eines Kinoforms oder eines Fourier-Hologramms handeln, welches ggf. auch eine versteckte Information enthalten kann, die nur mittels Bestrahlung mit monochromatischem Licht, beispielsweise einem Laserpointer sichtbar gemacht werden kann. Weiter ist es auch möglich, dass die Reliefstruktur Bereiche aufweist, in denen die Reliefstruktur als Makrostruktur, Mattstruktur oder als linsenförmige Struktur ausgeformt ist, beispielsweise ein Mikrolinsenfeld ausbildet. In der Replizierschicht können auch in unterschiedlichen Bereichen der Dekorlage unterschiedliche der oben dargestellten Reliefstrukturen abgeformt sein, um so in unterschiedlichen Bereichen unterschiedliche optisch variable Informationen zu generieren.

Als optisch aktive Schicht kann in der Dekorlage weiter auch eine Reflexionsschicht, beispielsweise eine metallische Schicht mit einer Schichtdicke zwischen 10 und 100 nm, weiter bevorzugt zwischen 20 und 50 nm und/oder eine oder mehrere HRI- oder LRI-Schicht(en) (HRI = High Refraction Index, LRI = Low Refraction Index) mit einer Schichtdicke zwischen 60 und 120 nm vorgesehen sein, beispielsweise eine Schicht aus ZnS oder ZnO oder TiO₂, ZrO₂ als HRI-Schicht oder beispielsweise SiOx, SiO₂, MgF₂ als LRI-Schicht.

Weiter kann als optisch aktive Schicht in der Dekorlage auch eine Volumenhologrammschicht vorgesehen sein, welche beispielsweise eine Schichtdicke zwischen 10 und 30 µm aufweist und in welche ein Volumenhologramm eingeschrieben ist. Auch hier ist es möglich, dass in die Volumenhologrammschicht bereichsweise unterschiedliche Volumenhologramme eingeschrieben sind.

Weiter kann als optisch aktive Schicht in der Dekorlage auch eine Schicht Mikrolinsenarray (Kugellinsen und/oder Lentikular-Zylinderlinsen) in Kombination mit einer darunterliegenden Schicht mit Mikrobildinformationen vorgesehen sein, welche Kombination beispielsweise eine Schichtdicke zwischen 10 und 100 µm aufweist.

Weiter kann als optisch aktive Schicht in der Dekorlage auch eine oder eine Kombination der folgenden Schichten vorgesehen sein: ein Dünnfilmschichtsystem, eine Farblackschicht, eine Schicht enthaltend optisch variable Pigmente, beispielsweise Dünnfilmschichtpigmente, Metallpigmente oder Flüssigkristallpigmente, eine Schicht enthaltend orientierte Flüssigkristalle, eine Schicht enthaltend lumineszierende oder thermochrome Pigmente oder Mischungen derartiger Pigmente. Ein Dünnfilmschichtsystem besteht hierbei aus einer Abfolge von Schichten mit einer Distanzschicht, welche die λ-Viertel-und A-Halbe-Bedingung für eine Lichtwellenlänge λ im Bereich des sichtbaren Lichts erfüllt und so blickwinkelabhängige Farbverschiebungseffekte zeigt. Ein derartiges Schichtsystem ist hierbei vorzugsweise dreischichtig, bestehend aus einer Absorptionsschicht, der oben beschriebenen Distanzschicht und einer Reflexionsschicht ausgebildet.

Neben den optisch aktiven Schichten weist die Dekorlage 13 vorzugsweise noch eine oder mehrere weitere Schichten, insbesondere eine oder mehrere Schutzschichten und/oder Haftvermittlungsschichten auf.

Vorzugsweise ist die Dekorlage 13 in den Flächenbereichen 21 einerseits und den Flächenbereichen 22 andererseits unterschiedlich ausgestaltet, und auch in den die Flächenbereiche 21 und 22 umgebenden Flächenbereichen wiederum anders ausgestaltet. So bildet die Dekorlage 13 beispielsweise in den Flächenbereichen 21 jeweils einen Mehrschichtkörper 23 aus und in den Flächenbereichen 22 jeweils einen Mehrschichtkörper 24 aus, wobei sich der Mehrschichtkörper 23 von dem Mehrschichtkörper 24 unterscheidet. Die Mehrschichtkörper 23 und 24 können sich hierbei in der Anzahl und Art der dort vorgesehenen optisch aktiven Schichten als auch in diesen Schichten kodierten Informationen unterscheiden, beispielsweise indem in jedem der Mehrschichtkörper 23 und 24 zwar eine Replizierschicht oder Volumenhologrammschicht vorgesehen ist, in den Mehrschichtkörpern 23 einerseits und den Mehrschichtkörpern 24 andererseits jedoch unterschiedliche Reliefstrukturen abgeformt bzw. unterschiedliche Volumenhologramme eingeschrieben sind. So ist es möglich, dass die Mehrschichtkörper 23 einerseits und die Mehrschichtkörper 24 andererseits eine unterschiedliche Kombination der oben angeführten optisch aktiven Schichten aufweisen, oder der Mehrschichtkörper 23 oder der Mehrschichtkörper 24 gegenüber dem Mehrschichtkörper 24 bzw. dem Mehrschichtkörper 23 noch zusätzliche der oben beschriebenen optisch aktiven Schichten aufweist.

So kann beispielsweise sowohl der Mehrschichtkörper 23 als auch der Mehrschichtkörper 24 eine metallische Reflexionsschicht enthalten, der Mehrschichtkörper 23 jedoch noch weiter zusätzlich eine Replizierschicht mit einem abgeformten Hologramm enthalten. Weiter ist es auch möglich, dass die Mehrschichtkörper 24 ebenfalls über eine Replizierschicht verfügen, in diese jedoch keine optisch aktive Oberflächenstruktur abgeformt ist. Weiter ist es möglich, dass der Mehrschichtkörper 24 nicht über eine Metallschicht verfügt, anstatt dessen jedoch über eine Schicht mit lumineszierenden Pigmenten oder über ein Dünnfilmschichtsystem verfügt, welche nicht in dem Mehrschichtkörper 23 vorgesehen ist.

Weiter ist es auch möglich, dass der Mehrschichtkörper 24 zusätzlich oder anstelle der oben angeführten optisch aktiven Schicht noch eine oder mehrere Schichten ausgewählt aus der Gruppe laserablatierbare Schichten, Laser-bleichbare Farbschichten, und mittels Laserbestrahlung zu einem Farbumschlag anregbare Schichten umfasst.

Die Schichten im Mehrschichtkörper 24 sind weiter als individualisierbare Schicht ausgestaltet, welche - wie im Folgenden beschrieben - vor oder während der Transferierung dieser Schichten auf eine zu dekorierende Oberfläche individualisiert werden, um eine individualisierte maschinenlesbare optische Markierung auszubilden. So ist beispielsweise vorzugsweise die Bruchkraft dieser Schicht so gewählt, dass sie bei dem im Folgenden beschriebenen Verfahren lediglich in individualisierten Teilbereichen auf die zu dekorierende Oberfläche übertragen und damit individualisiert werden. Weiter ist es beispielsweise möglich, dass diese Schichten so gewählt sind, dass sie mittels eines Lasers in ihren optischen Eigenschaften vor oder während der Transferierung zur Ausbildung einer individualisierten Information verändert werden können, oder entsprechend transparent sind, dass sie durch das Aufdrucken einer Farbschicht individualisiert werden können.

Wie in Fig. 1 gezeigt, weisen die Flächenbereiche 21 weiter jeweils ein optisch variables Dekorelement 25 auf. Dieses Dekorelement 25 kann hierbei - wie in Fig. 1 gezeigt - lediglich einen Teilbereich des Flächenbereichs 21 umfassen oder auch den gesamten Flächenbereich des Flächenbereichs 21 umfassen. Das Dekorelement umfasst damit jeweils einen der Mehrschichtkörper 23 oder einen Teilbereich eines der Mehrschichtkörper 23. Die Mehrschichtkörper 23 sind hierbei so gewählt, dass die Dekorelemente 25 gleichartig sind. Die Dekorelemente 25 besitzen somit den identischen Schichtaufbau, die identische Abfolge von Schichten und auch die in die Schicht der Mehrschichtkörper 23 ggf. kodierten Informationen, beispielsweise in Form einer Reliefstruktur oder eines eingeschriebenen Volumenhologramms sind identisch, sodass sämtliche der Dekorelemente 25 dem Betrachter die gleiche optisch variable Information vermitteln. Geringfügige Abwandlungen der Informationen im Rahmen der Fertigungstoleranz der eingesetzten Herstellungsverfahren sind natürlich möglich.

Wie in Fig. 2 gezeigt, ist auf die Dekorlage 13 in den Flächenbereichen 21 eine Kleberschicht 14 aufgebracht. Bei der Kleberschicht 14 handelt es sich um eine Kleberschicht mit einer Schichtdicke zwischen 0,5 und 5 µm, bevorzugt zwischen 1 µm und 2 µm. Die Kleberschicht 14 besteht hierbei aus einem thermisch aktivierbaren Kleber. Es ist jedoch auch möglich, dass als Kleber für die Kleberschicht 14 ein durch Druck aktivierbarer Kleber oder ein mittels UV-Strahlung aktivierbarer Kleber eingesetzt wird. Bei einem bevorzugten Ausführungsbeispiel der Erfindung, welches im Folgenden anhand der Figuren Fig. 3 bis Fig. 5 erläutert wird, ist die Kleberschicht 14 zwar - wie in Fig. 2 gezeigt - in den Flächenbereichen 21 aufgebracht, nicht jedoch in den Flächenbereichen 22. Auch bei dieser Ausführungsform ist es möglich, dass die Kleberschicht 14 noch in weiteren Flächenbereichen des Transferbandes 10 vorgesehen ist, die nicht den Flächenbereichen 21 und 22 zuzuordnen sind.

Die Kleberschicht 14 wird bevorzugt mittels eines großindustriellen Verfahrens, beispielsweise mittels Tiefdruck oder Siebdruck bei der Herstellung des Transferbandes 10 auf die Dekorlage 13 aufgedruckt.

Vor der Dekoration des Zielsubstrats wird nun in den Flächenbereichen 22 jeweils eine musterförmige Kleberschicht 5 aufgedruckt, deren Formgebung der Formgebung der individualisierten maschinenlesbaren optischen Markierung entspricht. Die maschinenlesbaren optischen Markierungen bestehen hierbei vorzugsweise aus jeweils einem eindimensionalen oder zweidimensionalen Barcode. So werden beispielsweise die aufeinanderfolgenden Flächenbereiche 22 jeweils mit einem unterschiedlichen Klebermuster bedruckt, welches jeweils der Formgebung eines unterschiedlichen eindimensionalen oder zweidimensionalen Barcodes entspricht.

Die Kleberschicht 15 wird hierbei bevorzugt mittels eines Tintenstrahldruckers aufgedruckt. Eine Registrierungsvorrichtung erfasst hierzu die Registermarken 26 und steuert einen Tintenstrahldruckkopf derart an, dass er den jeweiligen Flächenbereich 22 mit dem Muster des jeweils zugeordneten ein- oder zweidimensionalen Barcode bedruckt.

Als zu verdruckendes Druckmedium wird hierbei ein Druckmedium verwendet, welcher eine Lösung enthaltend einen durch Hitze und/oder Druck und/oder Strahlung aktivierbaren Kleber enthält.

Weiter ist es auch möglich, dass die Kleberschicht 15 - wie bereits oben geschildert - mittels eines Laserdruckwerks oder mittels Thermotransferdrucks unter Zuhilfenahme einer Transferfolie auf die Dekorlage 13 aufgebracht wird.

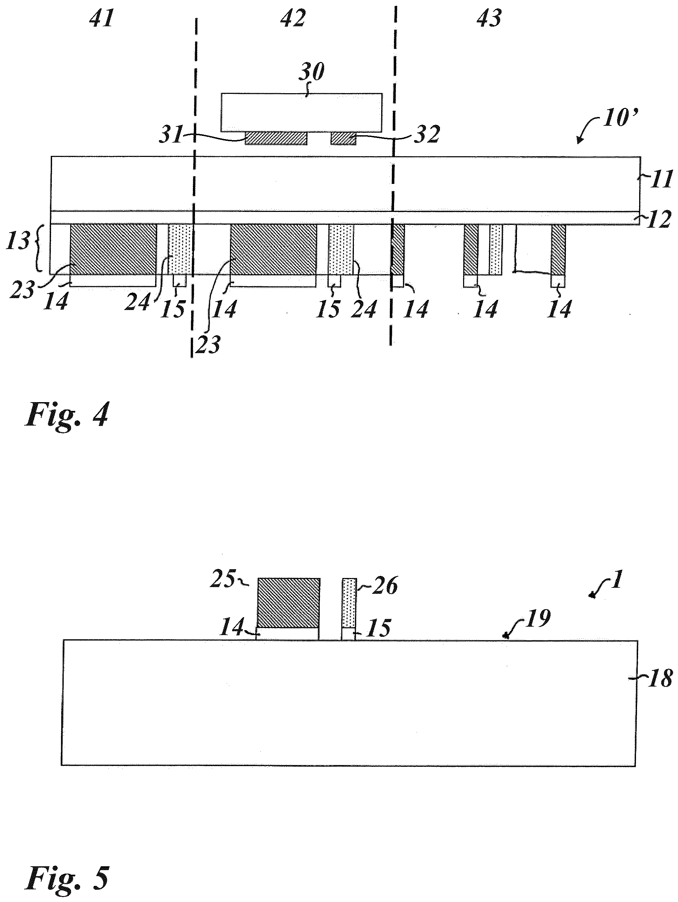

Das derart mit der zusätzlichen Kleberschicht 15 versehene Transferband 10' wird nun einem Prägewerk zugeführt, mittels dem die Dekorelemente 25 und die individualisierten maschinenlesbaren optischen Markierungen auf die zu dekorierende Oberfläche übertragen werden. Fig. 4 zeigt so beispielhaft jeweils einen Ausschnitt des Transferbandes 10' in einer Phase 41 vor Transferierung des Dekorelements 25 und der individualisierten maschinenlesbaren optischen Markierungen, einer Phase 42 während der Transferierung des Dekorelements 25 sowie der individualisierten maschinenlesbaren optischen Markierungen und einer Phase 43 nach Transferieren des Dekorelements 25 und der individualisierten maschinenlesbaren optischen Markierungen.

In der Phase 41 ist das Transferband 10' noch wie in Fig. 3 gezeigt, aufgebaut. In der Phase 42 wird ein Prägewerkzeug 30 von Seiten der Trägerfolie 11 auf das Transferband 10' gepresst, sodass das Transferband 10' gegen die in Fig. 4 nicht gezeigt zu dekorierende Oberfläche gepresst wird. Wie in Fig. 4 gezeigt, weist das Prägewerkzeug 30 eine erhabene Prägefläche 31 sowie eine erhabende Prägefläche 32 auf. Die erhabene Prägefläche 31 ist hierbei in Form des Dekorelements 25 ausgeformt, d.h. die Umrisslinien der Prägefläche 31 entsprechen den Umrisslinien des Dekorelements 25. Die Prägefläche 32 ist in Form der Flächenbereiche 22 ausgeformt. Die Prägeflächen 31 und 32 sind derart voneinander beabstandet auf dem Prägewerkzeug 30 angeordnet, dass die Prägefläche 32 deckungsgleich auf einen Flächenbereich 22 des Transferbandes 10' auftritt und die Prägefläche 31 innerhalb eines zugeordneten Flächenbereiches 21 des Transferbandes 10' auf das Transferband 10' auftrifft. Bei dem Prägewerkzeug 30 handelt es sich vorzugsweise um einen beheizten Prägestempel.

Durch den durch die Prägeflächen 31 und 32 auf das Transferband ausgeübten Druck wird die Transferfolie 10' im Bereich der Prägeflächen 31 und 32 gegen die zu dekorierende Oberfläche gepresst. Der hierdurch generierte Druck und/oder die von den Prägeflächen 31 und 32 auf das Transferband 10' übertragene Hitze aktiviert sodann die Kleberschichten 14 und 15 in den Flächenbereichen des Transferbandes 10', in denen die Prägeflächen 31 und 32 aufliegen.

So zeigt beispielsweise Fig. 5 ein Trägermaterial 18 eines Substratblattes oder einer Umverpackung, beispielsweise einer Umverpackung für Zigaretten. Das Trägermaterial 18 besteht hier beispielsweise aus einem Papierträger, welcher ggf. noch mit einer oder mehreren Lackschichten oder Kunststoffschichten beschichtet ist. Auf der Oberfläche 19 des Trägermaterials 18 haftet durch den oben beschriebenen Prozess nun ein Dekorelement 25 an sowie in den Teilbereichen eines Flächenbereichs 22, welche mit der Kleberschicht 15 belegt sind, ein Teilbereich des Mehrschichtkörpers 24 an, welcher in Form einer individualisierten maschinenlesbaren optischen Markierung strukturiert ist und so eine individualisierte maschinenlesbaren optischen Markierung 26 bildet.

Nach Aktivierung der Kleberschichten 14 und 15, wie oben beschrieben, wird das Trägerband 10' von der zu dekorierenden Oberfläche abgezogen. Die Haftkraft der Kleberschichten 14 und 15 zwischen der Dekorlage 13 einerseits und der zu dekorierenden Oberfläche 19 andererseits, die durch die Ablöseschicht 12 vermittelte Haftkraft zwischen der Dekorlage 13 einerseits und der Trägerfolie 11 andererseits und die Bruchkraft der Schichten der Dekorlage 13 sind hierbei so eingestellt, dass in Bereichen der Kleberschicht 15 und in dem Bereich, in dem die Kleberschicht 14 durch die Prägefläche 31 wie oben beschrieben aktiviert worden ist, die Dekorlage auf der zu dekorierenden Oberfläche 19 verbleibt und in den übrigen Bereich die Dekorlage auf dem Transferband 10' verbleibt und beim Abziehen diese Teilbereiche voneinander getrennt werden.

Nach Abziehen des Trägerbandes 10' verbleiben auf dem Trägerband 10' damit die in Fig. 4 in der Phase 43 gezeigten Bereiche der Dekorlage 13. Auf der zu dekorierenden Oberfläche 19 sind die in Fig. 5 gezeigten Teilbereiche der Dekorlage 13 des Transferbandes 10' transferiert. Die Umverpackung 1 weist damit auf dem Trägermaterial 18 ein Dekorelement 25 auf, welches von einem in Formgebung des Dekorelements ausgeformten Bereichs eines Mehrschichtkörpers 23 besteht und dessen Schichtaufbau damit dem Schichtaufbau der Mehrschichtkörper 23 entspricht. Weiter ist hierzu passergenau eine individualisierte maschinenlesbare optische Markierung 26 aufgebracht, deren Schichtaufbau dem Schichtaufbau der Mehrschichtkörper 24 entspricht.

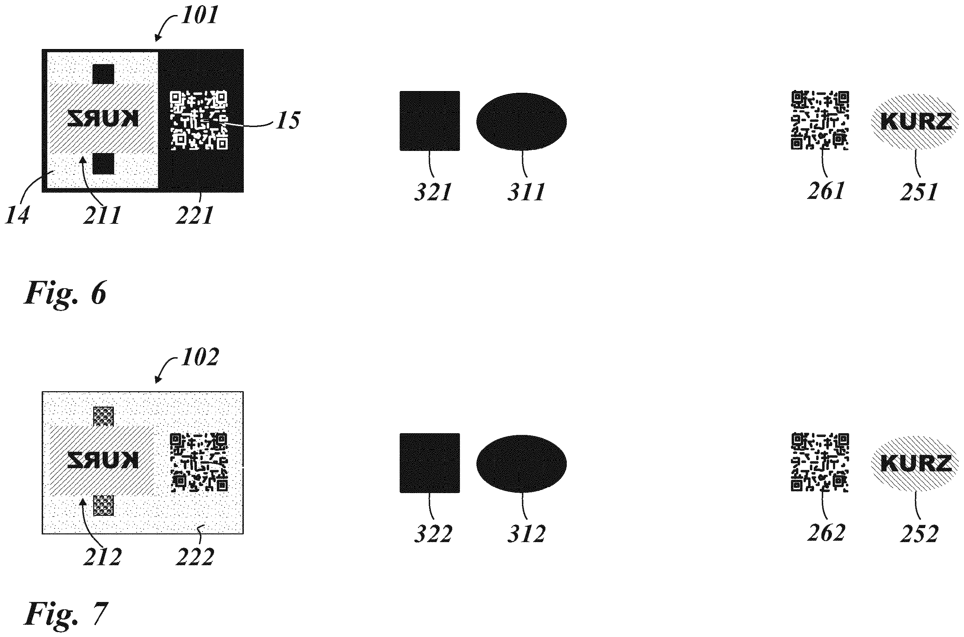

Fig. 6 zeigt beispielhaft eine entsprechende Ausgestaltung eines Ausschnitts 101 aus einem Transferband 10'.

Der Ausschnitt 101 weist einen Flächenbereich 211 sowie einen Flächenbereich 221 auf. Der Flächenbereich 211 entspricht dem Flächenbereich 21 und der Flächenbereich 221 dem Flächenbereich 22. In dem Flächenbereich 211 weist die Dekorlage 13 als Mehrschichtkörper 23 eine Replizierschicht mit einer abgeformten holographischen Reliefstruktur sowie eine an die Replizierschicht angrenzende metallische Reflexionsschicht aus Aluminium als optisch aktive Schichten auf. In dem Flächenbereich 211 ist weiterhin eine vollflächige Kleberschicht 14 aufgedruckt, die zumindest den Bereich der Replizierschicht mit der abgeformten holographischen Reliefstruktur abdeckt. In dem Flächenbereich 221 ist eine vollflächige metallische Reflexionsschicht als optisch aktive Schicht vorgesehen. Im Flächenbereich 221 ist - wie mit heller Färbung angedeutet - musterförmig die Kleberschicht 15 in Form eines zweidimensionalen Barcodes aufgedruckt. Die für den Transfer eingesetzten Prägeflächen 31 und 32 sind wie die Prägeflächen 311 bzw. 321 nach Fig. 6 ausgestaltet. Das transferierte Dekorelement ist in der Draufsicht wie das Dekorelement 251 nach Fig. 6 und die transferierte individualisierte maschinenlesbare optische Markierung wie die optische Markierung 261 mit der entsprechend der musterförmigen Kleberschicht 15 ausgeformten metallischen Reflexionsschicht nach Fig. 6 ausgeformt.

Ein nicht erfindungsgemäßes Ausführungsbeispiel wird nun im Weiteren anhand von Fig. 7 erläutert.

Bei diesem Ausführungsbeispiel wird das gemäß den Figuren Fig. 1 und Fig. 2 gefertigte Transferband 10 nicht nur in den Flächenbereichen 21, sondern ebenfalls in den Flächenbereichen 22 mit der Kleberschicht 14 versehen. Bzgl. des Aufbaus der Schichten des Transferbandes 10 sowie dessen Ausgestaltung wird auf die obigen Ausführungen zu Fig. 1 und Fig. 2 verwiesen.

Zur Individualisierung wird in dem nicht erfindungsgemäßen Ausführungsbeispiel nun auf die Kleberschicht 14 in den jeweiligen Flächenbereichen 22 eine Deaktivierungsschicht musterförmig aufgebracht, wobei die Formgebung der Deaktivierungsschicht der Formgebung der individualisierten maschinenlesbaren optischen Markierung in Negativform entspricht. Die Deaktivierungsschicht wird hierbei mittels der bereits oben in Bezug auf Fig. 3 beschriebenen Verfahren aufgebracht, also insbesondere mittels Tintenstrahldruck, mittels eines Laserdruckers oder mittels eines Thermotransferdruckkopfs von einer Transferfolie. Die Deaktivierungsschicht besitzt hier vorzugsweise eine Schichtdicke von 0,1 µm bis 2 µm.

Für eine mittels eines Tintenstrahldruckers verdruckbare Deaktivierungsschicht eignen sich in dem nicht erfindungsgemäßen Ausführungsbeispiel Silikonacrylate, kombiniert mit einem Bindemittel, wobei beide Komponenten und ggf. weitere Hilfsstoffe strahlungshärtend sein sollen, um beim Anpressen des Transferbandes mittels Prägewerkzeug unter Einwirkung von Wärme keine klebenden oder haftenden Eigenschaften mehr aufzuweisen und dadurch die klebenden oder haftenden Eigenschaften der Kleberschicht wirksam deaktivieren zu können.

Der Transfer des Dekorelements 25 und der individualisierten maschinenlesbaren optischen Markierung 26 erfolgt sodann auf die gleiche Art und Weise wie oben anhand der Figuren Fig. 4 und Fig. 5 dargestellt, bis auf dass die Kleberschicht 14 ebenfalls in den Flächenbereich 22 vorgesehen ist und in den Flächenbereichen, in denen nach Fig. 4 die Kleberschicht 15 aufgebracht ist, die Deaktivierungsschicht nicht vorgesehen ist und in den Teilbereichen des Flächenbereichs 22, in denen nach Fig. 4 die Kleberschicht 15 nicht vorgesehen ist, die Deaktivierungsschicht vorgesehen ist. Es wird so auf die diesbezüglichen obigen Ausführungen zu Fig. 4 und Fig. 5 verwiesen.

Fig. 7 zeigt nun eine beispielhafte nicht erfindungsgemäße Ausführungsform eines Abschnitts 102 eines mittels einer Deaktivierungsschicht in der oben beschriebenen Art und Weise individualisierten Transferbandes 10, die Ausformung der zugeordneten Prägeflächen 312 und 322, sowie des transferierten Dekorelements 252 und der transferierten individualisierten maschinenlesbaren optischen Markierung 262.

Die Flächenbereiche 21 sind so wie die Flächenbereiche 212 ausgebildet und die Flächenbereiche 22 wie die Flächenbereiche 222 ausgebildet. Wie in Fig. 7 gezeigt, ist das Transferband in dem nicht erfindungsgemäßen Ausführungsbeispiel vollflächig mit einer Kleberschicht beschichtet und in dem Flächenbereich 222 ist in negativer Form eine (in dunkler Farbe angedeutete) Deaktivierungsschicht aufgedruckt. Nach Transferierung mittels eines Prägewerkzeugs mit den Prägeflächen 312 und 322 weist die dekorierte Oberfläche das Dekorelement 252 sowie die individualisierte maschinenlesbare optische Markierung 262 auf.

Alternativ hierzu kann auch auf das Aufdrucken der Deaktivierungsschicht in negativer Form verzichtet werden und anstatt dessen - wie bereits oben ausgeführt - in den Flächenbereichen 22 eine strahlenaktivierbare oderdeaktivierbare Kleberschicht aufgebracht werden oder die Ablöseschicht 12 zumindest in den Flächenbereichen 22 als strahlenvernetzbare Ablöseschicht ausgebildet sein. Das Transferband ist ansonsten wie oben bereits anhand der Figuren Fig. 1 und Fig. 2 erläutert aufgebaut. Wie bereits oben ausgeführt, wird im Folgenden die Kleberschicht in den Bereichen 22 musterförmig in Negativform der individualisierten maschinell lesbaren optischen Kodierung belichtet. Als Kleber wird hierbei vorzugsweise ein UV-vemetzbarer Kleber verwendet und die Bestrahlung erfolgt vorzugsweise mittels eine entsprechenden UV-Lasers.

Alternativ oder zusätzlich ist es möglich, wie bereits oben ausgeführt eine strahlenvernetzbare Ablöseschicht vorzusehen und diese Ablöseschicht in einer Negativform der jeweiligen individualisierten maschinenlesbaren optischen Kodierung zu belichten.

Es ist hierbei auch möglich, dass mittels eines und desselben Belichtungsvorgangs gleichzeitig eine strahlenvernetzbare Ablöseschicht und eine strahlenvernetzbare Kleberschicht belichtet wird und hierdurch die Kantenschärfe der transferierten individualisierten maschinenlesbaren optischen Markierung weiter verbessert wird.

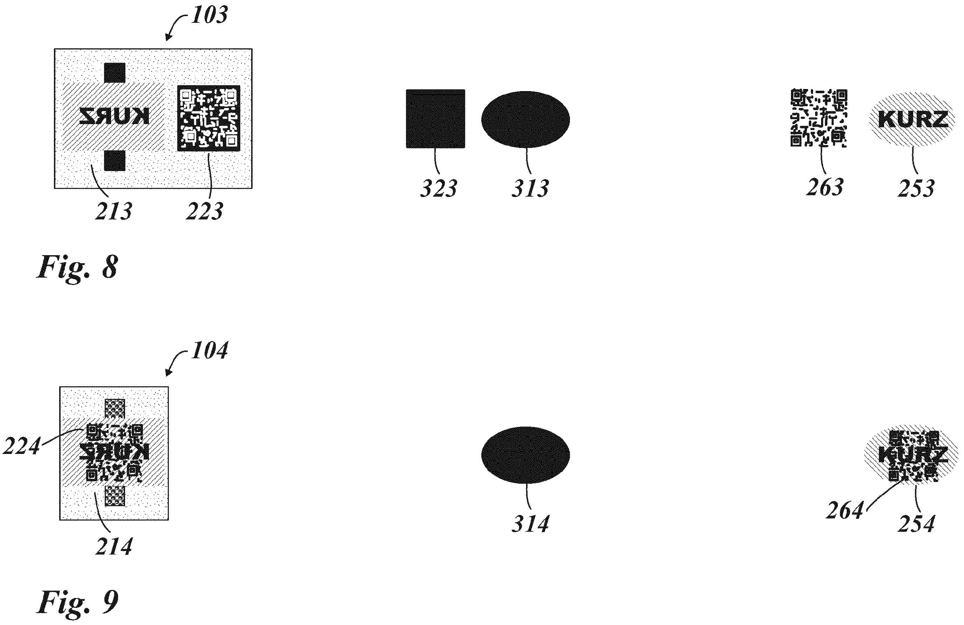

Gemäß einer weiteren nicht erfindungsgemäßen Ausführungsform wird das Transferband 10 nicht nur in den Flächenbereichen 21, sondern in den Flächenbereichen 22 mit der Kleberschicht 14 beschichtet und anschließend in den Flächenbereichen 22 jeweils eine musterförmige Farbschicht aufgebracht, deren Formgebung der Formgebung der individualisierten maschinenlesbaren optischen Markierung entspricht. Der Aufbau des Transferbandes entspricht dem bereits anhand der Figuren Fig. 1 und Fig. 2 beschriebenen Aufbau und es wird auf die diesbezüglichen Ausführungen nach Fig. 1 und Fig. 2 verwiesen. Der Transfer eines Dekorelements 25 und einer jeweiligen individualisierten maschinenlesbaren optischen Markierung auf die zu dekorierende Oberfläche erfolgt wie oben bereits anhand der Figuren Fig. 4 und Fig. 5 beschrieben, mit dem Unterschied, dass die Dekorlage im Flächenbereich 22 vollflächig transferiert wird. Im Weiteren ist es auch möglich, dieses Verfahren mit einem oder mehreren der bereits oben geschilderten Verfahren zu kombinieren. Eine besonders bevorzugte Ausführungsform dieser Variante wird nun anhand von Fig. 9 erläutert. Fig. 9 zeigt zum Einen einen Ausschnitt 104 aus einem Transferband, eine Prägefläche 314, ein Dekorelement 254 und eine individualisierte maschinenlesbare optische Markierung 264.

Bei der nicht erfindungsgemäßen Ausführungsform nach Fig. 9 sind die Flächenbereiche 22 des Transferbandes 10 nicht, wie in Fig. 1 gezeigt, getrennt und beabstandet von den Flächenbereichen 21 angeordnet, sondern die Flächenbereiche 21 und 22 überlappen sich. Die Flächenbereiche 21 sind so wie der Flächenbereich 214 und die Flächenbereiche 22 so wie der Flächenbereich 224 nach Fig. 9 zueinander angeordnet, sodass die Flächenbereiche 22 jeweils einen Teilbereich der Flächenbereiche 21 bilden. In dem Flächenbereich 214 weist der Mehrschichtkörper 23 bei dem Ausführungsbeispiel nach Fig. 9 eine Replizierschicht mit einer abgeformten Reliefstruktur eines Hologramms sowie eine vollflächige HRI-Schicht auf. Die Transparenz dieser beiden Schichten ist hierbei so gewählt, dass sich eine Gesamttransparenz von mehr als 75% ergibt. In dem Flächenbereich 214, welcher der individualisierbaren maschinenlesbaren optischen Markierung zugeordnet ist, ist eine Farbschicht musterförmig in Form eines zweidimensionalen Barcodes aufgedruckt, wie dies in Fig. 9 gezeigt ist. Die Farbschicht wird mittels eines Tintenstrahlendruckers, Laserdruckers oder mittels eines Thermotransferdruckkopfes aufgedruckt. Vorzugsweise wird ein Farblack, insbesondere ein schwarz eingefärbter Farblack verwendet. Durch die Verwendung der transparenten oder transluzenten HRI-Schicht wird eine überlappende Anordnung der maschinenlesbaren optischen Markierung und des Dekorelements ermöglicht. Dabei ist es zweckmäßig, wenn für den Farblack eine Farbe gewählt wird, die im Vergleich zu der Farbe des Trägermaterials 18 einen Kontrast von mindestens 20%, bevorzugt mindestens 70% ergibt. Die Prozentwerte sollen den Unterschied des Reflexions- oder Absorptionsvermögens der Module zu einem Hintergrund darstellen.

Es ist natürlich auch möglich, wie oben beispielsweise bei den Ausführungsbeispielen nach Fig. 6 und 7 ausgeführt, das Dekorelement und die individualisierte maschinenlesbare optische Markierung in voneinander getrennten Flächenbereichen auf die zu dekorierende Oberfläche zu transferieren. Durch die Verwendung einer HRI-Schicht oder anderer zumindest teiltransparenter, optisch variable Effekte generierenden Schichten in dem Mehrschichtkörper 24 ist es hierbei möglich, die individualisierte optisch variable Markierung noch mit zusätzlichen, optisch variablen Effekten zu versehen.

Gemäß einer weiteren Ausführungsform umfasst der Mehrschichtkörper 24 - wie bereits oben erwähnt - ein oder mehrere Schichten, welche mittels Strahlung in ihren optischen Eigenschaften veränderbar sind. Bei dieser Ausführungsform wird das Transferband 10 nicht nur in den Flächenbereichen 21, sondern auch in den Flächenbereichen 22 mit der Kleberschicht 14 versehen und zur Individualisierung diese Schichten in den Flächenbereichen 22 jeweils musterförmig gemäß der Formgebung der jeweiligen individualisierten maschinenlesbaren optischen Markierung belichtet.

Das Transferband 10 ist hierbei wie oben bereits anhand der Figuren Fig. 1 und Fig. 2 erläutert aufgebaut und es wird auf die diesbezüglichen Ausführungen verwiesen. Der Mehrschichtkörper 24 weist im Weiteren bevorzugt - ggf. noch zusätzlich zu den oben angeführten Schichten - eine strahlenablatierbare Schicht, beispielsweise eine Metallschicht einer Schichtdicke zwischen 20 und 60 nm, eine laser-bleichbare Farbschicht, bevorzugt einer Schichtdicke zwischen 0,1 und 1 µm und/oder eine mittels Bestrahlung zu einem Farbumschlag anregbaren Schicht auf. Die laser-bleichbare Farbschicht und/oder die mittels Bestrahlung zu einem Farbumschlag anregbare Schicht weist vorzugsweise entsprechende laser-bleichbare und/oder mittels Bestrahlung zu einem Farbumschlag anregbare Pigmente auf.

In einer besonders bevorzugten Ausführungsform ist die laser-bleichbare Farbschicht und/oder die mittels Bestrahlung zu einem Farbumschlag anregbare Schicht von der Kleberschicht 14 gebildet. Dadurch ist ein einfacherer und dünnerer Schichtaufbau des Transferbandes 14 möglich.

Bei der laser-bleichbaren Farbschicht handelt es sich um eine durch Pigmente oder andere Farbmittel eingefärbte Lackschicht einer Dicke von vorzugsweise 2 bis 10 µm. Die Pigmente bzw. andere farbgebende Systeme bzw. Farbmittel dieser Farblackschicht sind mit Hilfe eines Laserstrahls, dessen Wellenlänge vorzugsweise im sichtbaren Bereich liegt, selektiv bleichbar und/oder durch Farbumschlag in der Farbe veränderbar. Vorzugsweise liegt die Pigmentkonzentration dieser Lackschicht zwischen 1 % und 25%, bevorzugt 3% und 15% für laser-bleichbare Pigmente und bevorzugt 5% und 20% für mittels Bestrahlung zu einem Farbumschlag anregbare Pigmente, bezogen auf den Festkörper der Lackschicht. In der Lackschicht sollte sich vorzugsweise stets etwa eine konstante Menge Pigment enthalten sein, um eine kontraststarke optische Markierung erzeugen zu können. Dazu ist es vorteilhaft, wenn die Pigmentkonzentration in Abhängigkeit von der Schichtdicke der Lackschicht gewählt wird, wobei dieser Zusammenhang in etwa umgekehrt proportional ist. D.h. bei Verringerung der Lackschicht etwa auf die Hälfte muss die Pigmentkonzentration etwa verdoppelt werden und umgekehrt. Das Bindemittelsystem dieser Lackschicht darf durch die Einwirkung der Laser optisch nicht verändert werden, so dass an den bestrahlten Stellen lediglich eine farbige Kontrastmarkierung ohne erkennbare Schädigung der Folie entsteht. Die Folie wird weder an der Oberfläche noch im Inneren erkennbar geschädigt.

Hierbei hat es sich bewährt, als strahlenbleichbare Farbschicht eine Laser-bleichbare Farbschicht mit beispielsweise folgender Formulierung einzusetzen:

| | | | |
|---|---|---|---|
| Methylethylketon | | | 34,0 Teile |
| Toluol | | | 26,0 Teile |
| Ethylacetat | | | 13,0 Teile |
| Cellulosenitrat (niedrigviskos, 65% in Alkohol) | | | 20,0 Teile |
| Lineares Polyurethan (Flammpunkt > 200°C) | | | 3,5 Teile |
| Hochmolekulares Dispergieradditiv (40%, Aminzahl 20) | | | 2,0 Teile |
| | z. B.: Pigment Blue 15:4 | | 0,5 Teile |
| | | Pigment Red 57:1 | 0,5 Teile |
| | | Pigment Yellow 155 | 0,5 Teile |

Pigment Blue 15:4 ist ein Pigment mit Farbton cyan oder blau, Pigment Red 57:1 ist ein Pigment mit Farbton rot oder magenta, Pigment Yellow 155 ist ein Pigment mit Farbton gelb oder orange. Verwendet man alle drei Pigmente gemeinsam, so ergibt sich eine schwarze Schicht, in der beispielsweise mit einem gepulsten grünen Laser ein grüner individualisierte maschinenlesbare optische Markierung erzeugt werden kann. Verwendet man nur ein einzelnes Pigment, so erhält man eine cyan/blaue-, magenta/rote- oder gelbfarbige Schicht, die mit dem geeigneten Laser komplett hin zu transparent gebleicht werden kann.

Weiter hat es sich bewährt, als mittels Strahlung zu einem Farbumschlag anregbare Schicht eine Schicht mit folgender Formulierung zu verwenden:

| | | | |
|---|---|---|---|
| Methylethylketon | 34,0 Teile | | |
| Toluol | 26,0 Teile | | |
| Ethylacetat | | | 13,0 Teile |
| Cellulosenitrat (niedrigviskos, 65% in Alkohol) | | | 20,0 Teile |
| Lineares Polyurethan (Flammpunkt > 200°C) | | | 3,5 Teile |
| Hochmolekulares Dispergieradditiv (40%, Aminzahl 20) | | | 2,0 Teile |
| | z. B.: LP Red S31A (gelb -> rot) | | 0,5 Teile |
| | | LP Violet VG354 (magenta -> violet) | 0,5 Teile |

Pigment LP Red S31A ist ein Pigment, welches bei Bestrahlung einen Farbumschlag von Gelb nach Rot zeigt. LP Violet VG354 ist ein Pigment, welches bei Bestrahlung einen Farbumschlag von Magenta oder Pink nach Violett zeigt. "LP" steht hier für "Latent Pigment".

Zur Individualisierung werden die oben genannten Schichten vorzugsweise mittels eines Lasers musterförmig bestrahlt. Die laser-bleichbare Farbschicht und/oder die mittels Bestrahlung zu einem Farbumschlag anregbare Schicht kann an unterschiedlichen Schichtpositionen innerhalb des Schichtaufbaus des Mehrschichtkörpers 24 angeordnet sein, je nachdem, welche Schichten davon im Wesentlichen transparent oder transluzent und welche im Wesentlichen opak sind, welche Seite des Mehrschichtkörpers 24 als Sichtseite oder Betrachtungsseite vorgesehen ist und welche zumindest bereichsweisen Überlappungen zwischen den einzelnen Schichten gewünscht sind.

Dieses Individualisierungsverfahren kann auch in Kombination mit den oben beschriebenen Individualisierungsverfahren eingesetzt werden.

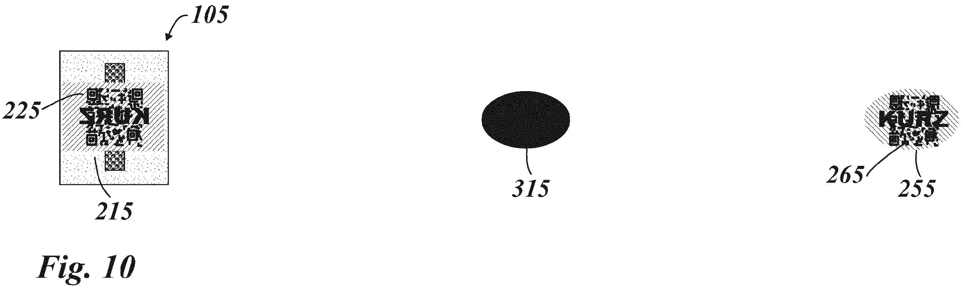

Fig. 8 und Fig. 10 zeigen zwei Varianten dieses Ausführungsbeispiels:
Fig. 8 zeigt einen Abschnitt 103 des Transferbands 10 mit einem Flächenbereich 213 und einem Flächenbereich 223, zwei Prägeflächen 313 und 323, eine individualisierte maschinenlesbare optische Markierung 263 und ein Dekorelement 253.

Das Transferband 10 ist in den Flächenbereichen 21 wie in dem Flächenbereich 213 nach Fig. 8 ausgebildet und in den Flächenbereichen 22 gemäß dem Flächenbereich 223 nach Fig. 8 ausgebildet. In dem Flächenbereich 213 ist eine Replizierschicht mit abgeformter Reliefstruktur eines Hologramms sowie eine partielle metallische Reflexionsschicht vorgesehen. Wie oben ausgeführt, können in dem zugeordneten Mehrschichtkörper 23 natürlich noch weiter optisch aktive Schichten vorgesehen sein. In den Flächenbereichen 223 ist eine vollflächige Metallschicht, vorzugsweise eine vollflächige Aluminiumschicht einer Schichtdicke zwischen 20 und 60 nm vorgesehen. Mittels eines Lasers wird nun die Metallschicht in dem Flächenbereich 223 in Negativform eines Barcodes belichtet und zwar mit einer Belichtungsstärke und einer Belichtungsdauer, sodass die Metallschicht in den belichteten Bereichen verdampft. Es verbleiben damit in dem Flächenbereich 223 die in Fig. 8 in dunkler Farbe dargestellten metallischen Bereiche. Nach Transferierung gemäß Fig. 4 und Fig. 5 bei Verwendung eines Prägewerkzeugs 30 mit den Prägeflächen 313 und 323 als Prägeflächen 32 und 31 verbleibt auf der zu dekorierenden Oberfläche 19 die in Fig. 8 gezeigte Anordnung des Dekorelements 253 neben der individualisierten maschinenlesbaren optischen Markierung 263.

Fig. 10 zeigt einen Abschnitt 105 des Transferbandes 10 mit den Flächenbereichen 215 und 225, eine Prägefläche 315 sowie ein Dekorelement 255 und eine individualisierte maschinenlesbare optische Markierung 265.

Die Flächenbereiche 21 des Transferbandes 10 sind wie die Flächenbereiche 215 und die Flächenbereiche 22 des Transferbandes 10 wie die Flächenbereiche 225 nach Fig. 10 ausgebildet. Bei dieser Ausführungsform sind die Flächenbereiche 215 und 225 überlappend angeordnet. Die Mehrschichtkörper 24 weisen als optisch aktive Schichten eine schwarze Lackschicht, eine Replizierlackschicht mit einer abgeformten holographischen oder diffraktiven Reliefstruktur und eine metallische Reflexionsschicht auf. Die den Flächenbereich 225 umgebenden Bereiche des Flächenbereichs 215 weisen ebenfalls diese Schichten, nicht jedoch die schwarze Farblackschicht auf.

Mittels eines Lasers wird nun der Flächenbereich 225 in Negativform eines zweidimensionalen Barcodes belichtet. Die Belichtungsstärke sowie die Pigmente der schwarzen Farbschicht sind hierbei so gewählt, dass durch die Belichtung mittels des Lasers die Pigmente bis hin zur Transparenz gebleicht werden, sodass die schwarze Farbschicht in den belichteten Bereichen transparent wird und die schwarze, opake Farbwirkung lediglich in den nicht belichteten Bereichen noch verbleibt. Anschließend erfolgt der Transfer des Dekorelements und der wie oben beschrieben individualisierten maschinenlesbaren optischen Markierung auf die zu dekorierende Oberfläche wie oben bereits anhand der Figuren Fig. 4 und Fig. 5 erläutert. Hierbei ist die Prägefläche des Prägewerkzeugs 30 wie die Prägefläche 305 nach Fig. 10 ausgebildet. Nach Transferierung ergibt sich die in Fig. 10 gezeigte Anordnung des Dekorelements 255 und der individualisierten maschinenlesbaren Kodierung 265.

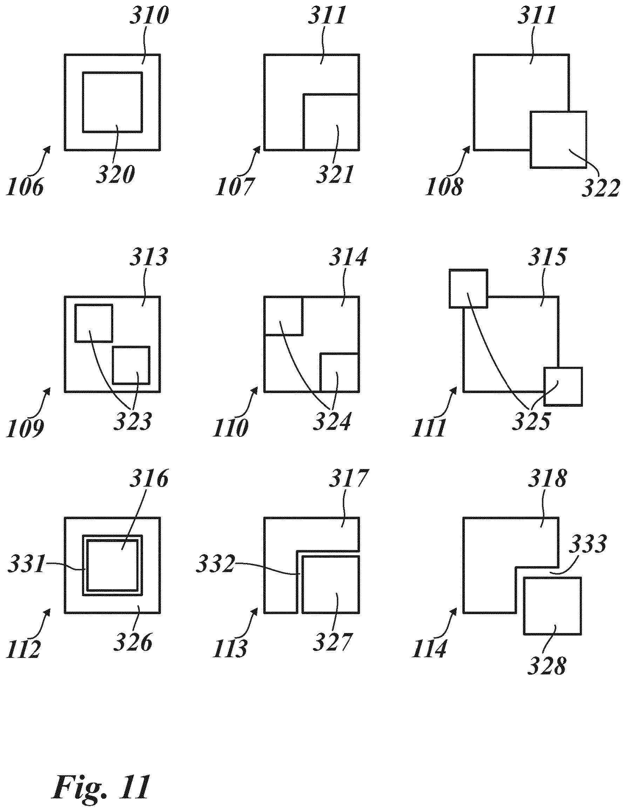

Fig. 11 zeigt verschiedene Abschnitte 106 bis 114 verschiedener Transferfolien 10, die verschiedene Anordnungen von ersten und zweiten Flächenbereichen aufweisen.

Der Abschnitt 106 weist eine Anordnung auf, in der ein erster Flächenbereich 310 einen umlaufenden, geschlossenen Rahmen für einen innerhalb des Rahmens angeordneten zweiten Flächenbereich 320 bildet.

Abschnitt 107 weist eine Anordnung auf, bei der ein erster Flächenbereich 107 einen offenen, einen zweiten Flächenbereich 321 nur an zwei Außenseiten umfassenden Rahmen bildet. Der erste und der zweite Flächenbereich bilden dabei eine gemeinsame rechteckige Außenkontur, wobei die Kantenlänge des ersten Flächenbereichs 311die Gesamtkantenlänge beider Flächenbereiche definiert. Das heißt, dass der zweite Flächenbereich 321 innerhalb der Konturen des ersten Flächenbereichs 311 angeordnet ist.

Der Abschnitt 108 weist eine Anordnung auf, bei der ein erster Flächenbereich 312 einen offenen, einen zweiten Flächenbereich 322 nur an zwei Außenseiten umfassenden Rahmen bildet. Die gemeinsame Außenkontur des ersten und zweiten Flächenbereichs ist nicht rechteckig, vielmehr ragt der zweite Flächenbereich 322 aus der gedachten rechteckigen Kontur des ersten Flächenbereichs 312 heraus bzw. überlappt die rechteckige Kontur des ersten Flächenbereichs 312 mit der rechteckigen Kontur des zweiten Flächenbereichs 322 partiell.

Der Abschnitt 109 weist eine Anordnung eines ersten Flächenbereichs 313 und zwei zweiten Flächenbereichen 323 auf, die ähnlich dem Abschnitt 106 innerhalb der Außenkontur des ersten Flächenbereichs 313 angeordnet sind.

Der erste Flächenbereich 313 bildet dabei einen Rahmen und/oder einen Hintergrund für die zweiten Flächenbereiche 323.

Der Abschnitt 110 weist eine Anordnung auf, bei der ein erster Flächenbereich 314 nur bereichsweise die zweiten Flächenbereiche 324 umschließt, ähnlich dem Abschnitt 107. Das heißt, dass die zweiten Flächenbereiche 324 innerhalb der Konturen des ersten Flächenbereichs 314 angeordnet sind.

Der Abschnitt 111 weist eine Anordnung ähnlich der des Abschnitts 108 mit zwei zweiten Flächenbereichen 325 auf. Die zweiten Flächenbereiche 325 ragen aus der gedachten rechteckigen Kontur des ersten Flächenbereichs 315 heraus bzw. überlappen die rechteckige Kontur des ersten Flächenbereichs 315 mit den jeweils rechteckigen Konturen des zweiten Flächenbereichs 325 partiell.

Die Abschnitte 112 bis 114 entsprechen den Anordnungen gemäß der Abschnitte 106 bis 108 mit dem Unterschied, dass die jeweiligen ersten und zweiten Flächenbereiche 316 bis 318 bzw. 326 bis 328 nicht direkt aneinander grenzen, sondern dass dazwischen jeweils eine Ruhezone 331 bis 333 als Freiraum angeordnet ist. Der Freiraum kann insbesondere als Ruhezone für einen maschinenlesbaren Code im ersten und/oder zweiten Flächenbereich 316 bis 318 bzw. 326 bis 328 vorgesehen sein. Die Breite und/oder Länge der Ruhezonen 331 bis 333 kann dabei an die Erfordernisse des jeweiligen maschinenlesbaren Codes angepasst sein und beträgt vorzugsweise zwischen 0,1 mm und 5 mm.

Die prinzipiellen Anordnungen gemäß der Abschnitte 106 bis 114 sind auch mit anders geformten ersten und zweiten Flächenbereichen denkbar, beispielsweise mit runden, ovalen, dreieckigen, vieleckigen oder unregelmäßig geformten ersten und zweiten Flächenbereichen.

Optisch variable Effekte können entweder dem ersten oder zweiten Flächenbereich zugeordnet sein, insbesondere lagegenau, d.h. im Register zu dem ersten oder zweiten Flächenbereich angeordnet sein. Optisch variable Effekte können sich aber auch kontinuierlich ohne Unterbrechung über die ersten und zweiten Flächenbereich erstrecken. Ebenso sind Kombinationen möglich aus optisch variablen Effekten, die bereichsweise dem ersten oder zweiten Flächenbereich zugeordnet sind und sich bereichsweise kontinuierlich ohne Unterbrechung über die ersten und zweiten Flächenbereich erstrecken.

## Patentansprüche

1. Verfahren zur Dekoration von Oberflächen (19), insbesondere zur Dekoration von Umverpackungen, wobei das Verfahren folgende Schritte umfasst: Bereitstellen eines Transferbandes (10) umfassend eine bandförmige Trägerfolie (11) und eine Dekorlage (13), wobei die Dekorlage (13) eine Vielzahl von gleichartigen optisch variablen Dekorelementen (25, 251 bis 255) aufweist, die in voneinander getrennten und in Längsrichtung des Transferbandes voneinander beabstandeten ersten Flächenbereichen (21, 211 bis 215) angeordnet sind, und wobei die Dekorlage (13) voneinander getrennte und in Längsrichtung des Transferbandes voneinander beabstandete zweite Flächenbereiche (22, 221 bis 225) aufweist, in denen die Dekorlage (13) ein oder mehrere individualisierbare Schichten zur Bereitstellung von jeweils unterschiedlichen maschinenlesbaren optischen Markierungen (26, 261 bis 265) aufweist, Transferieren jeweils eines ersten Flächenbereichs (21, 211 bis 215) oder eines Teilbereichs eines ersten Flächenbereichs (21, 211 bis 215) sowie eines zweiten Flächenbereichs (22, 221 bis 225) oder eines Teilbereichs eines zweiten Flächenbereichs (22, 221 bis 225) der Dekorlage (13) auf eine zu dekorierende Oberfläche (19), wobei die ein oder mehreren individualisierbaren Schichten des jeweiligen zweiten Flächenbereichs (22, 221 bis 225) vor oder während der Transferierung individualisiert werden, sodass neben einem der optisch variablen Dekorelemente (25, 251 bis 255) eine individualisierte maschinenlesbare optische Markierung (26, 261 bis 265) von dem Transferband (10) auf die zu dekorierende Oberfläche (19) transferiert wird, wobei beim Transferieren das Transferband (10) im zweiten Flächenbereich (22, 221) mittels eines Prägewerkzeugs (30) gegen die zu dekorierende Oberfläche (19) gepresst wird,
**dadurch gekennzeichnet, dass**
das Transferband (10) eine zwischen der Dekorlage (13) und der Trägerfolie (10) angeordnete Ablöseschicht (12) umfasst, dass zur Individualisierung die der Ablöseschicht (12) entgegengesetzte Oberflächen der Dekorlage (13) im zweiten Flächenbereich (22, 221) oder in dem dem zweiten Flächenbereich entsprechenden Oberflächenbereich der zu dekorierenden Oberfläche mit einer musterförmigen Kleberschicht (15) versehen wird, wobei die Formgebung der musterförmigen Kleberschicht (15) der Formgebung der individualisierten maschinenlesbaren optischen Markierung entspricht, dass in den Teilbereichen, in denen die musterförmige Kleberschicht (15) zwischen der Dekorlage (13) und der zu dekorierenden Oberfläche (19) angeordnet ist, die individualisierbaren Schichten beim Abziehen auf der zu dekorierenden Oberfläche (19) verbleiben und in den übrigen Teilbereichen des zweiten Flächenbereichs (22, 221) die individualisierbaren Schichten auf dem Transferband (10) verbleiben und beim Abziehung von den auf der zu dekorierenden Oberfläche (19) verbleibenden Teilbereichen getrennt werden, dass in den ersten Flächenbereichen einerseits und in den zweiten Flächenbereichen andererseits unterschiedliche Reliefstrukturen in eine Replizierschicht der Dekorlage abgeformt sind.

2. Verfahren nach Anspruch 1,
**dadurch gekennzeichnet,**
**dass** entweder
a) das bereitgestellte Transferband (10) eine partielle Kleberschicht (14) aufweist, welche auf der der Ablöseschicht entgegengesetzten Oberfläche der Dekorlage (13) aufgebracht ist, und dass die partielle Kleberschicht (14) in den ersten Flächenbereichen (21, 211), nicht jedoch in den zweiten Flächenbereichen (22, 221) vorgesehen ist, oder
b) auf die der Ablöseschicht (12) entgegengesetzte Oberfläche der Dekorlage eine partielle Kleberschicht (14) mittels Tiefdruck oder Siebdruck derart aufgedruckt wird, dass die partielle Kleberschicht (14) in den ersten Flächenbereichen (21, 211), nicht jedoch in den zweiten Flächenbereichen (22, 221) vorgesehen ist.

3. Verfahren nach Anspruch 1 oder 2,
**dadurch gekennzeichnet,**
**dass** die musterförmige Kleberschicht (15) mittels Tintenstrahldruck oder Laserdruck aufgedruckt wird oder die musterförmige Kleberschicht (15) von einer Transferfolie mittels einem Thermotransferdruckkopf musterförmig auf die der Ablöseschicht (12) entgegengesetzte Oberfläche der Dekorlage (13) im zweiten Flächenbereich (22, 221) oder dem dem zweiten Flächenbereich entsprechenden Oberflächenbereich der zu dekorierenden Oberfläche übertragen wird.

4. Verfahren zur Dekoration von Oberflächen (19), insbesondere zur Dekoration von Umverpackungen, wobei das Verfahren folgende Schritte umfasst: Bereitstellen eines Transferbandes (10) umfassend eine bandförmige Trägerfolie (11) und eine Dekorlage (13), wobei die Dekorlage (13) eine Vielzahl von gleichartigen optisch variablen Dekorelementen (25, 251 bis 255) aufweist, die in voneinander getrennten und in Längsrichtung des Transferbandes voneinander beabstandeten ersten Flächenbereichen (21, 211 bis 215) angeordnet sind, und wobei die Dekorlage (13) voneinander getrennte und in Längsrichtung des Transferbandes voneinander beabstandete zweite Flächenbereiche (22, 221 bis 225) aufweist, in denen die Dekorlage (13) ein oder mehrere individualisierbare Schichten zur Bereitstellung von jeweils unterschiedlichen maschinenlesbaren optischen Markierungen (26, 261 bis 265) aufweist, Transferieren jeweils eines ersten Flächenbereichs (21, 211 bis 215) oder eines Teilbereichs eines ersten Flächenbereichs (21, 211 bis 215) sowie eines zweiten Flächenbereichs (22, 221 bis 225) oder eines Teilbereichs eines zweiten Flächenbereichs (22, 221 bis 225) der Dekorlage (13) auf eine zu dekorierende Oberfläche (19), wobei die ein oder mehreren individualisierbaren Schichten des jeweiligen zweiten Flächenbereichs (22, 221 bis 225) vor oder während der Transferierung individualisiert werden, sodass neben einem der optisch variablen Dekorelemente (25, 251 bis 255) eine individualisierte maschinenlesbare optische Markierung (26, 261 bis 265) von dem Transferband (10) auf die zu dekorierende Oberfläche (19) transferiert wird, wobei beim Transferieren das Transferband (10) im zweiten Flächenbereich (22, 223, 225) mittels eines Prägewerkzeugs (30) vollflächig gegen die zu dekorierende Oberfläche (19) gepresst wird, und wobei die individualisierbaren Schichten im zweiten Flächenbereich (22, 223, 225) beim Abziehen des Transferbands auf der zu dekorierenden Oberfläche (19) verbleiben,
**dadurch gekennzeichnet, dass**
das Transferband (10) eine zwischen der Dekorlage (13) und der Trägerfolie (10) angeordnete Ablöseschicht (12) umfasst, dass die der Ablöseschicht (12) entgegengesetzte Oberfläche der Dekorlage (13) im zweiten Flächenbereich (223, 225) mit einer Kleberschicht versehen wird, dass zur Individualisierung ein oder mehrere individualisierbare Schichten musterförmig zur Ablation dieser Schichten oder zur Erzielung eines Farbumschlags in diesen Schichten nach dem Aufbringen der Kleberschicht mit einem Laser bestrahlt werden, wobei die Formgebung der bestrahlten Teilbereiche der Formgebung der individualisierten maschinenlesbaren optischen Markierung (26, 263, 265) oder der Formgebung der individualisierten maschinenlesbaren optischen Markierung (26, 263, 265) in Negativform entspricht, und dass in den ersten Flächenbereichen einerseits und in den zweiten Flächenbereichen andererseits unterschiedliche Reliefstrukturen in eine Replizierschicht der Dekorlage abgeformt sind.

5. Verfahren nach Anspruch 4,
**dadurch gekennzeichnet,**
**dass** die bestrahlten individualisierbaren Schichten ausgewählt werden aus der Gruppe: metallische Schichten, Laser-bleichbare Farbschichten und mittels Laserbestrahlung zu einem Farbumschlag anregbare Schichten.

6. Verfahren nach einem der Ansprüche 4 oder 5,
**dadurch gekennzeichnet,**
**dass** in den zweiten Flächenbereichen die Replizierschicht mit einer zumindest bereichsweise abgeformten Reliefstruktur vorgesehen wird, dass eine oder mehrere der individualisierbaren Schichten eine den optischen Effekt der Reliefstruktur verstärkende Reflexionsschicht, insbesondere eine metallische Reflexionsschicht oder eine HRI-Schicht, ausbilden und dass durch die Bestrahlung diese ein oder mehreren individualisierbaren Schichten in den bestrahlten Teilbereichen, insbesondere durch deren Ablation, in ihrer Reflexionswirkung reduziert werden und so der optische Effekt der Reliefstruktur in den bestrahlten Teilbereichen in seiner optischen Wirkung verändert, insbesondere verringert wird.

7. Verfahren nach einem der vorhergehenden Ansprüche,
**dadurch gekennzeichnet,**
**dass** die ein oder mehreren individualisierbaren Schichten zur Ausbildung eines eindimensionalen Barcodes und/oder eines zweidimensionalen Barcodes als individualisierte maschinenlesbare optische Markierung (26, 261 bis 265) individualisiert werden.

8. Verfahren nach einem der vorgehenden Ansprüche,
**dadurch gekennzeichnet,**
**dass** die Dekorlage (13) in den ersten Flächenbereichen (21, 211 bis 215) und/oder in den zweiten Flächenbereichen jeweils ein oder mehrere optisch aktive Schichten umfasst, welche durch Interferenz und/oder Beugung des einfallenden Lichts in Abhängigkeit vom Einfallswinkel des einfallenden Lichts und/oder der Betrachtungsrichtung unterschiedliche Bildinformationen und/oder unterschiedliche Farben zeigen.

9. Verfahren nach einem der vorgehenden Ansprüche,
**dadurch gekennzeichnet,**
**dass** die Dekorlage in den ersten Flächenbereichen (21, 211 bis 215) und/oder den zweiten Flächenbereichen jeweils die Replizierschicht mit einer in eine Oberfläche der Replizierschicht zumindest bereichsweise abgeformten Reliefstruktur, insbesondere umfassend eine diffraktive Reliefstruktur, eine Reliefstruktur eines Hologramms, eine Makrostruktur und/oder eine Linsenstruktur, eine Volumenhologrammschicht mit einem Volumenhologramm, ein Dünnfilmschichtsystem und/oder eine Schicht umfassend cholesterische Flüssigkristalle aufweist.

10. Verfahren nach einem der vorgehenden Ansprüche,
**dadurch gekennzeichnet,**
**dass** jedes der optisch variablen Dekorelemente (26, 261 bis 265) eine verborgene Information enthält, welche mittels eines Verifizierungselements sichtbar gemacht werden kann.

11. Verfahren nach einem der vorgehenden Ansprüche,
**dadurch gekennzeichnet,**
**dass** die Dekorlage (13) in den zweiten Flächenbereichen (22, 221 bis 225) jeweils eine eingefärbte Lackschicht, eine metallische Reflexionsschicht, die Replizierschicht mit abgeformter Reliefstruktur, eine Volumenhologrammschicht, ein Dünnfilmschichtsystem und/oder eine Schicht umfassend Flüssigkristalle umfasst.

12. Verfahren nach einem der vorgehenden Ansprüche,
**dadurch gekennzeichnet,**
**dass** die ersten Flächenbereiche (21, 211 bis 215) in einer konstanten Rasterweite voneinander beabstandet sind, dass jedem der ersten Flächenbereiche (21, 211 bis 215) ein zweiter Flächenbereich (22, 221 bis 225) zugeordnet ist, und dass die zweiten Flächenbereiche (22, 221 bis 225) in einer konstanten Rasterweite voneinander beabstandet und in jeweils gleichartiger Lage zum jeweiligen zugeordneten ersten Flächenbereich auf dem Transferband (10) angeordnet sind.

13. Verfahren nach einem der vorgehenden Ansprüche,
**dadurch gekennzeichnet,**
**dass** entweder
a) die ersten und die zweiten Flächenbereiche (21, 22, 211 bis 225) sich nicht überlappen und jeder erste Flächenbereich (21, 211 bis 215) von jedem zweiten Flächenbereich (22, 221 bis 225) bevorzugt zumindest 0,5 mm, insbesondere zumindest 1 mm voneinander beabstandet ist, oder
b) die ersten und zweiten Flächenbereiche (214, 215, 224, 225) überlappend und/oder ineinander geschachtelt angeordnet sind, wobei insbesondere die ersten Flächenbereiche zumindest bereichsweise einen Rahmen für die zweiten Flächenbereiche bilden, und die zweiten Flächenbereiche ganz oder teilweise innerhalb des Rahmens angeordnet sind.

14. Verfahren nach einem der vorgehenden Ansprüche,
**dadurch gekennzeichnet,**
**dass** sich die Dekorlage (13) in den ersten Flächenbereichen (21, 211 bis 215) einerseits und den zweiten Flächenbereichen (22, 221 bis 225) andererseits unterscheidet, insbesondere eine unterschiedliche Abfolge von Schichten und/oder unterschiedliche Schichten aufweist.

15. Verfahren nach einem der vorgehenden Ansprüche,
**dadurch gekennzeichnet,**
**dass** beim Transferieren das Transferband (10) mittels eines Prägewerkzeugs (30) gegen die zu dekorierende Oberfläche (19) gepresst wird, welches eine erste erhabene Prägefläche (31, 311 bis 315) aufweist, deren Formgebung der Formgebung des Dekorelements (25, 251 bis 255) entspricht, und eine zweite erhabene Prägefläche (32, 221 bis 225) aufweist, deren Formgebung der Formgebung des zweiten Flächenbereichs (22, 221 bis 225) entspricht, und dass das Transferband (10) vor dem Transferieren mittels einer Registrierungsvorrichtung derart in Bezug auf das Prägewerkzeug (30) ausgerichtet wird, dass die erste Prägefläche (31, 311 bis 315) im Bereich eines ersten Flächenbereichs (21, 211 bis 215) auf das Transferband (10) auftrifft und die zweite Prägefläche (32, 321 bis 323) im Bereich eines zweiten Flächenbereichs (22, 221 bis 225) auf das Transferband (10) auftrifft.

16. Verfahren nach einem der vorgehenden Ansprüche,
**dadurch gekennzeichnet,**
**dass** in dem ersten Flächenbereich eine Reliefstruktur in der Replizierschicht der Dekorlage abgeformt ist, welche filigran strukturierte optische Effekte generiert, beispielsweise filigrane Motive, Logos oder alphanumerische Zeichen generiert und/oder dass in dem zweiten Flächenbereich eine Reliefstruktur in der Replizierlackschicht abgeformt ist, welche grob strukturierte optische Effekte generiert, insbesondere kontinuierliche Farbverläufe oder einen flächigen Farbwechsel generiert.

17. Verfahren nach einem der vorgehenden Ansprüche,
**dadurch gekennzeichnet,**
**dass** die Dekorlage in den zweiten Flächenbereichen die Replizierschicht aufweist, in deren Oberfläche in jedem zweiten Flächenbereich mindestens bereichsweise in ein oder mehreren ersten Teilbereichen eine erste Reliefstruktur und in ein oder mehreren zweiten Teilbereichen eine zweite Reliefstruktur abgeformt ist, welche sich in zumindest einem Strukturparameter von der ersten Reliefstruktur unterscheidet und dass die individualisierbaren Schichten des jeweiligen zweiten Flächenbereichs sowohl in den ersten Teilbereichen als auch in den zweiten Teilbereichen individualisiert werden, insbesondere zur Bereitstellung einer individualisierten maschinenlesbaren optischen Markierung, welche einen ersten Teil umfasst, der bei ersten Beleuchtungsbedingungen auslesbar ist und in den ein oder mehreren ersten Teilbereichen generiert wird, und einem zweiten Teil, der bei zweiten, von den ersten Beleuchtungsbedingungen unterschiedlichen Beleuchtungsbedingungen auslesbar ist und von den ein oder mehreren zweiten Teilbereichen generiert wird.

18. Verfahren nach einem der vorgehenden Ansprüche,
**dadurch gekennzeichnet,dass** die Dekorlage in den ersten Flächenbereichen und in den zweiten Flächenbereichen die Replizierschicht aufweist, in deren Oberfläche zumindest bereichsweise eine Reliefstruktur abgeformt ist, dass in dem Bereich, in welchem jeweils ein erster und ein zweiter Flächenbereich einander angrenzen, eine Ruhezone ausgebildet ist, in der keine Reliefstruktur, eine Mattstruktur oder eine Mottenaugenstruktur in die Replizierschicht abgeformt ist und/oder in der ein oder mehrere der in der Dekorschicht vorgesehenen Reflexionsschichten vollständig oder zu einem überwiegenden Teil nicht vorgesehen oder entfernt sind, wobei die Ruhezonen bevorzugt eine Breite zwischen 0,1 mm und 5 mm , weiter bevorzugt zwischen 0,1 mm und 2 mm aufweist.

19. Verfahren nach einem der Ansprüche 4 bis 18,
**dadurch gekennzeichnet,**
**dass** auf die der Ablöseschicht (12) entgegengesetzte Oberfläche der Dekorlage (13) eine Kleberschicht (14) vollflächig zumindest in den ersten Flächenbereichen (21, 211 bis 215), vorzugsweise zumindest in den ersten und zweiten Flächenbereichen, insbesondere mittels Siebdruck oder Tiefdruck aufgebracht wird, dass beim Transferieren das Transferband (10) in einem ersten Flächenbereich (21, 211 bis 215) mittels eines der Formgebung des Dekorelements (25, 251 bis 255) entsprechenden Prägewerkzeugs (30) gegen die zu dekorierende Oberfläche (19) gepresst wird, dass das Transferband (10) von der zu dekorierenden Oberfläche (19) abgezogen wird und hierbei das Dekorelement (25, 251 bis 255) auf der zu dekorierenden Oberfläche (19) verbleibt und die umgebenden Bereiche der Dekorlage (13) auf dem Transferband (10) verbleiben und beim Abziehen von dem Dekorelement (25, 251 bis 255) getrennt werden.

## Claims

1. Method for decorating surfaces (19), in particular for decorating outer packaging, wherein the method comprises the following steps:
providing a transfer band (10) comprising a band-shaped carrier foil (11) and a decorative layer (13), wherein the decorative layer (13) has a plurality of similar optically variable decorative elements (25, 251 to 255), which are arranged in first surface regions (21, 211 to 215), separated from each other and spaced apart from each other in the longitudinal direction of the transfer band, and wherein the decorative layer (13) has second surface regions (22, 221 to 225) separated from each other and spaced apart from each other in the longitudinal direction of the transfer band, in which the decorative layer (13) has one or several customisable layers for providing respectively different machine-readable optical markings (26, 261 to 265), transferring respectively a first surface region (21, 211 to 215) or a partial region of a first surface region (21, 211 to 215) and a second surface region (22, 221 to 225) or a partial region of a second surface region (22, 221 to 225) of the decorative layer (13) onto a surface (19) to be decorated, wherein the one or several customisable layers of the respective second surface region (22, 221 to 225) are customised before or during the transfer, such that a customised machine-readable optical marker (26, 261 to 265) is transferred from the transfer band (10) onto the surface (19) to be decorated alongside one of the optically variable decorative elements (25, 251 to 255), wherein the transfer band (10) is pressed against the surface (19) to be decorated in the second surface region (22, 221) during the transfer by means of an embossing tool (30), **characterised in that**
the transfer band (10) comprises a release layer (12) arranged between the decorative layer (13) and the carrier foil (10), that the surface of the decorative layer (13) set against the release layer (12) in the second surface region (22, 221) or in the surface region of the surface to be decorated corresponding to the second surface region is provided with a patterned adhesive layer (15) for customisation, wherein the shaping of the patterned adhesive layer (15) corresponds to the shaping of the customised machine-readable optical marker, that in the partial regions in which the patterned adhesive layer (15) is arranged between the decorative layer (13) and the surface (19) to be decorated, the customisable layers remain on the surface (19) to be decorated when pulled away, and in the remaining partial regions of the second surface region (22,221), the customisable layers remain on the transfer band (10), and are separated from the partial regions remaining on the surface (19) to be decorated when pulled away, that different relief structures are moulded in a replication layer of the decorative layer in the first surface regions on the one hand and in the second surface regions on the other.

2. Method according to claim 1,
**characterised in that**
either
a) the readied transfer band (10) has a partial adhesive layer (14) which is applied on the surface of the decorative layer (13) set against the release layer, and that the partial adhesive layer (14) is provided in the first surface regions (21, 211), but not in the second surface regions (22, 221), or
b) a partial adhesive layer (14) is applied onto the surface of the decorative layer set against the release layer (12) by means of gravure printing or screen printing in such a way that the partial adhesive layer (14) is provided in the first surface regions (21, 211), but not in the second surface regions (22, 221).

3. Method according to claim 1 or 2,
**characterised in that**
the patterned adhesive layer (15) is applied by means of inkjet printing or laser printing, or the patterned adhesive layer (15) is transferred from a transfer foil onto the surface of the decorative layer (13) set against the release layer (12) in the second surface region (22, 221), or onto the surface region of the surface to be decorated corresponding to the second surface region in a patterned form by means of a thermal transfer printhead.

4. Method for decorating surfaces (19), in particular for decorating outer packaging, wherein the method comprises the following steps:
providing a transfer band (10) comprising a band-shaped carrier foil (11) and a decorative layer (13), wherein the decorative layer (13) has a plurality of similar optically variable decorative elements (25, 251 to 255), which are arranged in first surface regions (21, 211 to 215), separated from each other and spaced apart from each other in the longitudinal direction of the transfer band, and wherein the decorative layer (13) has second surface regions (22, 221 to 225) separated from each other and spaced apart from each other in the longitudinal direction of the transfer band, in which the decorative layer (13) has one or several customisable layers for providing respectively different machine-readable optical markings (26, 261 to 265), transferring respectively a first surface region (21, 211 to 215) or a partial region of a first surface region (21, 211 to 215) and a second surface region (22, 221 to 225) or a partial region of a second surface region (22, 221 to 225) of the decorative layer (13) onto a surface (19) to be decorated, wherein the one or several customisable layers of the respective second surface region (22, 221 to 225) are customised before or during the transfer, such that a customised machine-readable optical marker (26, 261 to 265) is transferred from the transfer band (10) onto the surface (19) to be decorated alongside one of the optically variable decorative elements (25, 251 to 255), wherein the transfer band (10) is pressed against the surface (19) to be decorated in the second surface region (22, 223, 225) over its entire surface during the transfer by means of an embossing tool (30), and wherein the customisable layers in the second surface region (22, 223, 225) remain on the surface (19) to be decorated when the transfer band is pulled away,
**characterised in that**
the transfer band (10) comprises a release layer (12) arranged between the decorative layer (13) and the carrier foil (10), that the surface of the decorative layer (13) set against the release layer (12) in the second surface region (223, 225) is provided with an adhesive layer, that for customisation, one or several customisable layers are irradiated in a patterned form with a laser to ablate these layers or to attain a colour change in these layers after the application of the adhesive layer, wherein the shaping of the irradiated partial regions corresponds to the shaping of the customised machine-readable optical marker (26, 263, 265) or to the shaping of the customised machine-readable optical marker (26, 263, 265) in the negative form, and that in the first surface regions on the one hand and in the second surface regions on the other, different relief structures are moulded in a replication layer of the decorative layer.

5. Method according to claim 4,
**characterised in that**
the irradiated customisable layers are selected from the group: metallic layers, laser-bleachable colour layers and layers able to be stimulated to change colour by means of laser irradiation.

6. Method according to one of claims 4 or 5,
**characterised in that**
in the second surface regions, the replication layer is provided with a relief structure moulded at least in some regions, that one or several of the customisable layers form a reflection layer which strengthens the optical effect of the relief structure, in particular a metallic reflection layer or an HRI layer, and that these one or several customisable layers in the irradiated partial regions are reduced in their reflection effect by the irradiation, in particular through their ablation, and so the optical effect of the relief structure in the irradiated partial regions is changed, in particular reduced, in its optical effect.

7. Method according to one of the preceding claims,
**characterised in that**
the one or several customisable layers are customised to form a one-dimensional barcode and/or a two-dimensional barcode as a customised machine-readable optical marker (26, 261 to 265).

8. Method according to one of the preceding claims,
**characterised in that**
the decorative layer (13) in the first surface regions (21, 211 to 215) and/or in the second surface regions comprises one or several optically active layers respectively, which, by interference and/or by bending the incoming light, show different image information and/or different colours, depending on the angle of incidence of the incident light and/or the viewing direction.

9. Method according to one of the preceding claims,
**characterised in that**
the decorative layer in the first surface regions (21, 211 to 215) and/or the second surface regions respectively has the replication layer, having a relief structure moulded in a surface of the replication layer in at least some regions, in particular comprising a diffractive relief structure, a relief structure of a hologram, a macrostructure and/or a lens structure, a volume hologram layer having a volume hologram, a thin-film layer system and/or a layer comprising cholesteric liquid crystals.

10. Method according to one of the preceding claims,
**characterised in that**
each of the optically variable decorative elements (26, 261 to 265) contains a hidden piece of information, which can be made visible by means of a verification element.

11. Method according to one of the preceding claims,
**characterised in that**
the decorative layer (13) in the second surface regions (22, 221 to 225) respectively comprises a coloured lacquer layer, a metallic reflection layer, the replication layer having a moulded relief structure, a volume hologram layer, a thin-film layer system and/or a layer comprising liquid crystals.

12. Method according to one of the preceding claims,
**characterised in that**
the first surface regions (21, 211 to 215) are spaced apart from each other in a constant screen ruling, that a second surface region (22, 221 to 225) is assigned to each of the first surface regions (21, 211 to 215), and that the second surface regions (22, 221 to 225) are arranged spaced apart from each other in a constant screen ruling and respectively in a similar position to the respective assigned first surface region on the transfer band (10).

13. Method according to one of the preceding claims,
**characterised in that**
either
a) the first and the second surface regions (21, 22, 211 to 225) do not overlap, and each first surface region (21, 211 to 215) is preferably spaced at least 0.5 mm, in particular at least 1 mm, apart from each second surface region (22, 221 to 225), or
b) the first and second surface regions (214, 215, 224, 225) are arranged overlapping and/or nested into each other, wherein in particular the first surface regions form a frame for the second surface regions in at least some regions, and the second surface regions are arranged entirely or partially within the frame.

14. Method according to one of the preceding claims,
**characterised in that**
the decorative layer (13) differs in the first surface regions (21, 211 to 215) on the one hand and the second surface regions (22, 221 to 225) on the other, in particular has a different sequence of layers and/or different layers.

15. Method according to one of the preceding claims,
**characterised in that**
the transfer band (10) is pressed against the surface (19) to be decorated during the transfer by means of an embossing tool (30), said surface (19) to be decorated having a first elevated embossing surface (31, 311 to 315) whose shaping corresponds to the shaping of the decorative element (25, 251 to 255), and having a second elevated embossing surface (32, 221 to 225) whose shaping corresponds to the shaping of the second surface region (22, 221 to 225), and that the transfer band (10) is aligned in relation to the embossing tool (30) before the transfer by means of a registration device in such a way that the first embossing surface (31, 311 to 315) meets the transfer band (10) in the region of a first surface region (21, 211 to 215), and the second embossing surface (32, 321 to 323) meets the transfer band (10) in the region of a second surface region (22, 221 to 225).

16. Method according to one of the preceding claims,
**characterised in that**
a relief structure is moulded in the replication layer of the decorative layer in the first surface region, said relief structure generating intricately structured optical effects, for example generating intricate motifs, logos or alphanumerical signs, and/or that a relief structure is moulded in the replication lacquer layer in the second surface region, said relief structure generating roughly structured optical effects, in particular generating continuous colour gradients or a laminar colour change.

17. Method according to one of the preceding claims,
**characterised in that**
the decorative layer has the replication layer in the second surface regions, in whose surface in each second surface region a first relief structure is moulded at least in some regions in one or several first partial regions, and a second relief structure is moulded in one or several second partial regions, which differs from the first relief structure in at least one structural parameter, and that the customisable layers of the respective second surface region are customised both in the first partial regions and in the second partial regions, in particular for providing a customised machine-readable optical marker, which comprises a first part, which can be read in first lighting conditions and in which one or several first partial regions is generated, and a second part, which can be read in second lighting conditions different from the first and from which one or several second partial regions is generated.

18. Method according to one of the preceding claims,
**characterised in that**
the decorative layer has the replication layer in the first surface regions and in the second surface regions, in whose surface a relief structure is moulded at least in some regions, and that in the region in which a first and a second surface region respectively border each other, a rest zone is formed, in which no relief structure, a matt structure or a moth eye structure is moulded in the replication layer and/or in which one or several of the reflection layers provided in the decorative layer are completely or in large part not provided or removed, wherein the rest zone preferably has a width between 0.1 mm and 5 mm, further preferably between 0.1 mm and 2 mm.

19. Method according to one of claims 4 to 18,
**characterised in that**
an adhesive layer (14) is applied on the surface of the decorative layer (13) set against the release layer (12) over its entire surface at least in the first surface regions (21, 211 to 215), preferably at least in the first and second surface regions, in particular by means of screen printing or gravure printing, that the transfer band (10) is pressed against the surface (19) to be decorated in a first surface region (21, 211 to 215) during the transfer by means of an embossing tool (30) corresponding to the shaping of the decorative element (25, 251 to 255), that the transfer band (10) is pulled away from the surface (19) to be decorated, and in the process the decorative element (25, 251 to 255) remains on the surface (19) to be decorated, and the surrounding regions of the decorative layer (13) remain on the transfer band (10) and are separated from the decorative element (25, 251 to 255) when pulled away.

## Revendications

1. Procédé de décoration de surfaces (19), en particulier de décoration de suremballages, dans lequel le procédé comporte les étapes suivantes :
la fourniture d'une bande de transfert (10) comprenant un film support en forme de bande (11) et une couche décorative (13), dans lequel la couche décorative (13) présente une pluralité d'éléments décoratifs (25, 251 à 255) variables optiquement similaires qui sont agencés dans des premières zones de surface (21, 211 à 215) espacées les unes des autres dans le sens longitudinal de la bande de transfert et séparées les unes des autres, et dans lequel la couche décorative (13) présente des secondes zones de surface (22, 221 à 225) espacées les unes des autres dans le sens longitudinal de la bande de transfert et séparées les unes des autres, dans lesquelles la couche décorative (13) présente une ou plusieurs couches individualisables pour la fourniture de différents marquages (26, 261 à 265) optiques lisibles par machine respectivement,
le transfert respectivement d'une première zone de surface (21, 211 à 215) ou d'une zone partielle d'une première zone de surface (21, 211 à 215) ainsi que d'une seconde zone de surface (22, 221 à 225) ou d'une zone partielle d'une seconde zone de surface (22, 221 à 225) de la couche décorative (13) à une surface (19) à décorer, dans lequel les une ou plusieurs couches individualisables de la seconde zone de surface (22, 221 à 225) respective sont individualisées avant ou pendant le transfert de sorte qu'à côté d'un des éléments décoratifs (25, 251 à 255) variables optiquement un marquage (26, 261 à 265) optique lisible par machine individualisé soit transféré de la bande de transfert (10) à la surface (19) à décorer, dans lequel lors du transfert la bande de transfert (10) dans la seconde zone de surface (22, 221) est pressée au moyen d'un outil d'estampage (30) contre la surface (19) à décorer,
**caractérisé en ce que**
la bande de transfert (10) comporte une couche de détachement (12) agencée entre la couche décorative (13) et le film support (10), que pour l'individualisation la surface opposée à la couche de détachement (12) de la couche décorative (13) dans la seconde zone de surface (22, 221) ou dans la zone de surface correspondant à la seconde zone de surface de la surface à décorer est pourvue d'une couche de colle (15) en forme de modèle, dans lequel la formation de la couche de colle (15) en forme de modèle correspond à la formation du marquage optique lisible par machine individualisé, que dans les zones partielles dans lesquelles la couche de colle (15) en forme de modèle est agencée entre la couche décorative (13) et la surface (19) à décorer, les couches individualisables restent lors du retrait sur la surface (19) à décorer et dans les zones partielles restantes de la seconde zone de surface (22, 221) les couches individualisables restent sur la bande de transfert (10) et sont séparées lors du retrait des zones partielles restantes sur la surface (19) à décorer, que dans les premières zones de surface d'une part et dans les secondes zones de surface d'autre part différentes structures en relief sont moulées dans une couche de réplication de la couche décorative.

2. Procédé selon la revendication 1,
**caractérisé en ce**
a) **que** la bande de transfert (10) fournie présente une couche de colle (14) partielle qui est appliquée sur la surface opposée à la couche de détachement de la couche décorative (13), et que la couche de colle (14) partielle est prévue dans les premières zones de surface (21, 211), toutefois pas dans les secondes zones de surface (22, 221), ou
b) **que** sur la surface opposée à la couche de détachement (12) de la couche décorative une couche de colle (14) partielle est imprimée par impression en taille-douce ou par sérigraphie de telle manière que la couche de colle (14) partielle soit prévue dans les premières zones de surface (21, 211), toutefois pas dans les secondes zones de surface (22, 221).

3. Procédé selon la revendication 1 ou 2,
**caractérisé en ce**
**que** la couche de colle (15) en forme de modèle est imprimée par impression à jet d'encre ou impression laser ou la couche de colle (15) en forme de modèle est transmise par un film de transfert au moyen d'une tête d'impression à transfert thermique en forme de modèle sur la surface opposée à la couche de détachement (12) de la couche décorative (13) dans la seconde zone de surface (22, 221) ou la zone de surface correspondant à la seconde zone de surface de la surface à décorer.

4. Procédé de décoration de surfaces (19), en particulier de décoration de suremballages, dans lequel le procédé comporte les étapes suivantes :
la fourniture d'une bande de transfert (10) comprenant un film support en forme de bande (11) et une couche décorative (13), dans lequel la couche décorative (13) présente une pluralité d'éléments décoratifs (25, 251 à 255) variables optiquement similaires qui sont agencés dans des premières zones de surface (21, 211 à 215) espacées les unes des autres dans le sens longitudinal de la bande de transfert et séparées les unes des autres, et dans lequel la couche décorative (13) présente des secondes zones de surface (22, 221 à 225) espacées les unes des autres dans le sens longitudinal de la bande de transfert et séparées les unes des autres, dans lesquelles la couche décorative (13) présente une ou plusieurs couches individualisables pour la fourniture de différents marquages (26, 261 à 265) optiques lisibles par machine respectivement,
le transfert respectivement d'une première zone de surface (21, 211 à 215) ou d'une zone partielle d'une première zone de surface (21, 211 à 215) ainsi que d'une seconde zone de surface (22, 221 à 225) ou d'une zone partielle d'une seconde zone de surface (22, 221 à 225) de la couche décorative (13) à une surface (19) à décorer, dans lequel les une ou plusieurs couches individualisables de la seconde zone de surface (22, 221 à 225) respective sont individualisées avant ou pendant le transfert de sorte qu'à côté d'un des éléments décoratifs (25, 251 à 255) variables optiquement un marquage (26, 261 à 265) optique lisible par machine individualisé soit transféré de la bande de transfert (10) à la surface (19) à décorer, dans lequel lors du transfert la bande de transfert (10) dans la seconde zone de surface (22, 223, 225) est pressée au moyen d'un outil d'estampage (30) sur toute la surface contre la surface (19) à décorer, et dans lequel les couches individualisables dans la seconde zone de surface (22, 223, 225) restent lors du retrait de la bande de transfert sur la surface (19) à décorer,
**caractérisé en ce que**
la bande de transfert (10) comporte une couche de détachement (12) agencée entre la couche décorative (13) et le film support (10), que la surface opposée à la couche de détachement (12) de la couche décorative (13) dans la seconde zone de surface (223, 225) est pourvue d'une couche de colle que pour l'individualisation une ou plusieurs couches individualisables sont irradiées en forme de modèle pour l'ablation de ces couches ou pour l'obtention d'un changement de couleur dans ces couches après l'application de la couche de colle avec un laser, dans lequel la formation des zones partielles irradiées correspond à la formation du marquage (26, 263, 265) optique lisible sur machine individualisé ou la formation du marquage (26, 263, 265) optique lisible sur machine individualisé sous la forme négative, que dans les premières zones de surface d'une part et dans les secondes zones de surface d'autre part différentes structures en relief sont moulées dans une couche de réplication de la couche décorative.

5. Procédé selon la revendication 4,
**caractérisé en ce**
**que** les couches individualisables irradiées sont sélectionnées dans le groupe : couches métalliques, couches de couleur blanchissables au laser et couches excitables par irradiation laser pour un changement de couleur.

6. Procédé selon l'une quelconque des revendications 4 ou 5,
**caractérisé en ce**
**que** dans les secondes zones de surface la couche de réplication est prévue avec une structure en relief au moins par endroits moulée, qu'une ou plusieurs des couches individualisables réalisent une couche de réflexion renforçant l'effet optique de la structure en relief, en particulier une couche de réflexion métallique ou une couche HRI, et que par le rayonnement ces une ou plusieurs couches individualisables sont réduites dans les zones partielles irradiées, en particulier par leur ablation, dans leur action de réflexion et l'effet optique de la structure en relief est ainsi modifié dans les zones partielles irradiées dans son action optique, en particulier diminué.

7. Procédé selon l'une quelconque des revendications précédentes,
**caractérisé en ce**
**que** les une ou plusieurs couches individualisables sont individualisées pour la réalisation d'un code-barres à une dimension et/ou d'un code-barres à deux dimensions en tant que marquage (26, 261 à 265) optique lisible par machine individualisé.

8. Procédé selon l'une quelconque des revendications précédentes,
**caractérisé en ce**
**que** la couche décorative (13) comporte dans les premières zones de surface (21, 211 à 215) et/ou dans les secondes zones de surface respectivement une ou plusieurs couches actives optiquement qui montrent par interférence et/ou diffraction de la lumière incidente en fonction de l'angle d'incidence de la lumière incidente et/ou du sens d'observation différentes informations d'image et/ou différentes couleurs.

9. Procédé selon l'une quelconque des revendications précédentes,
**caractérisé en ce**
**que** la couche décorative présente dans les premières zones de surface (21, 211 à 215) et/ou dans les secondes zones de surfaces respectivement la couche de réplication avec une structure en relief moulée au moins par endroits dans une surface de la couche de réplication, en particulier comprenant une structure en relief diffractive, une structure en relief d'un hologramme, une macrostructure et/ou une structure de lentille, une couche d'hologramme de volume avec un hologramme de volume, un système de couche à film mince et/ou une couche comprenant des cristaux liquides cholestériques.

10. Procédé selon l'une quelconque des revendications précédentes,
**caractérisé en ce**
**que** chacun des éléments décoratifs (26, 261 à 265) variables optiquement contient des informations cachées qui peuvent être rendues visibles au moyen d'un élément de vérification.

11. Procédé selon l'une quelconque des revendications précédentes,
**caractérisé en ce**
**que** la couche décorative (13) comporte dans les secondes zones de surface (22, 221 à 225) respectivement une couche de vernis colorée, une couche de réflexion métallique, la couche de réplication avec une structure en relief moulée, une couche d'hologramme de volume, un système de couche à film mince et/ou une couche comprenant des cristaux liquides.

12. Procédé selon l'une quelconque des revendications précédentes,
**caractérisé en ce**
**que** les premières zones de surface (21, 211 à 215) sont espacées dans une largeur de trame constante les unes des autres, qu'une seconde zone de surface (22, 221 à 225) est associée à chacune des premières zones de surface (21, 211 à 215), et que les secondes zones de surface (22, 221 à 225) sont espacées les unes des autres dans une largeur de trame constante et sont agencées dans une position respectivement similaire à la première zone de surface associée respective sur la bande de transfert (10).

13. Procédé selon l'une quelconque des revendications précédentes,
a) que les premières et les secondes zones de surface (21, 22, 211 à 225) ne se chevauchent pas et chaque première zone de surface (21, 211 à 215) est espacée de chaque seconde zone de surface (22, 221 à 225) de préférence d'au moins 0,5 mm, en particulier d'au moins 1 mm les unes des autres, ou
b) les première et seconde zones de surface (214, 215, 224, 225) sont agencées de manière chevauchante et/ou emboîtée les unes dans les autres, dans lequel en particulier les premières zones de surface forment au moins par endroits un cadre pour les secondes zones de surface, et les secondes zones de surface sont agencées entièrement ou partiellement dans le cadre.

14. Procédé selon l'une quelconque des revendications précédentes,
**caractérisé en ce**
**que** la couche décorative (13) se distingue dans les premières zones de surface (21, 211 à 215) d'une part et les secondes zones de surface (22, 221 à 225) d'autre part, en particulier présente une suite différente de couches et/ou des couches différentes.

15. Procédé selon l'une quelconque des revendications précédentes,
**caractérisé en ce**
**que** lors du transfert la bande de transfert (10) est pressée au moyen d'un outil d'estampage (30) contre la surface (19) à décorer qui présente une première surface d'estampage (31, 311 à 315) en relief, dont la formation correspond à la formation de l'élément décoratif (25, 251 à 255), et présente une seconde surface d'estampage (32, 221 à 225) en relief, dont la formation correspond à la formation de la seconde zone de surface (22, 221 à 225), et que la bande de transfert (10) est orientée avant le transfert au moyen d'un dispositif d'enregistrement en ce qui concerne l'outil d'estampage (30) de telle manière que la première surface d'estampage (31, 311 à 315) rencontre dans la zone d'une première zone de surface (21, 211 à 215) la bande de transfert (10) et la seconde surface d'estampage (32, 321 à 323) rencontre dans la zone d'une seconde zone de surface (22, 221 à 225) la bande de transfert (10).

16. Procédé selon l'une quelconque des revendications précédentes,
**caractérisé en ce**
**que** dans la première zone de surface une structure en relief est moulée dans la couche de réplication de la couche décorative qui génère des effets optiques structurés en filigrane, par exemple motifs filigranes, logos ou symboles alphanumériques et/ou que dans la seconde zone de surface une structure en relief est moulée dans la couche de vernis de réplication qui génère des effets optiques grossièrement structurés, en particulier des dégradés de couleur continus ou un changement de couleur plan.

17. Procédé selon l'une quelconque des revendications précédentes,
**caractérisé en ce**
**que** la couche décorative présente dans les secondes zones de surface la couche de réplication, dans la surface de laquelle dans chaque seconde zone de surface au moins par endroits dans une ou plusieurs premières zones partielles une première structure en relief et dans une ou plusieurs secondes zones partielles une seconde structure en relief est moulée, laquelle se distingue dans au moins un paramètre de structure de la première structure en relief et que les couches individualisables de la seconde zone de surface respective non seulement dans les premières zones partielles mais aussi dans les secondes zones partielles sont individualisées, en particulier pour la fourniture d'un marquage optique lisible sur machine individualisé, qui comporte une première partie qui est lisible dans des premières conditions d'éclairage et est générée dans les une ou plusieurs premières zones partielles, et une seconde partie qui est lisible dans des secondes conditions d'éclairage différentes des premières conditions d'éclairage et est générée par les une ou plusieurs secondes zones partielles.

18. Procédé selon l'une quelconque des revendications précédentes,
**caractérisé en ce**
**que** la couche décorative présente dans les premières zones de surface et dans les secondes zones de surface la couche de réplication, dans la surface de laquelle au moins par endroits une structure en relief est moulée, que dans la zone dans laquelle respectivement une première et une seconde zone de surface sont contiguës l'une à l'autre, une zone de repos est réalisée, dans laquelle aucune structure en relief, une structure mate ou une structure en forme d'œil de mite est moulée dans la couche de réplication et/ou dans les une ou plusieurs des couches de réflexion prévues dans la couche décorative ne sont pas prévues ou éloignées complètement ou en une partie principale, dans lequel les zones de repos présentent de préférence une largeur entre 0,1 mm et 5 mm, de manière encore préférée entre 0,1 mm et 2 mm.

19. Procédé selon l'une quelconque des revendications 4 à 18,
**caractérisé en ce**
**que** sur la surface opposée à la couche de détachement (12) de la couche décorative (13) une couche de colle (14) est appliquée sur toute la surface au moins dans les premières zones de surface (21, 211 à 215), de préférence au moins dans les premières et secondes zones de surface, en particulier par sérigraphie ou impression en taille douce, que lors du transfert la bande de transfert (10) est pressée dans une première zone de surface (21, 211 à 215) au moyen d'un outil d'estampage (30) correspondant à la formation de l'élément décoratif (25, 251 à 255) contre la surface (19) à décorer, que la bande de transfert (10) est retirée de la surface (19) à décorer et ici l'élément décoratif (25, 251 à 255) reste sur la surface (19) à décorer et les zones environnantes de la couche décorative (13) restent sur la bande de transfert (10) et lors du retrait sont séparées de l'élément décoratif (25, 251 à 255).
